# EUROPEAN PATENT APPLICATION

(11) **EP 4 464 825 A1**
(43) Date of publication of application: **20.11.2024**
(21) Application number: 23740274.8
(22) Date of filing: 11.01.2023
(51) Int. Cl.: C25D 11/00, B32B 15/20, C23C 22/68

(54) **SURFACE-TREATED ALUMINUM SHEET, RESIN-COATED SURFACE-TREATED ALUMINUM SHEET, AND MOLDED BODY**

(30) Priority: 11.01.2022 JP 2022002640; 15.12.2022 JP 2022200048
(71) Applicant: Toyo Kohan Co., Ltd., Tokyo 141-8260 (JP)
(72) Inventor: TAKENAGA, Tomoyasu, Kudamatsu-shi Yamaguchi 744-8611 (JP); SHIMODA, Youichi, Kudamatsu-shi Yamaguchi 744-8611 (JP); TAGUCHI, Naomi, Kudamatsu-shi Yamaguchi 744-8611 (JP); TAYA, Shinichi, Kudamatsu-shi Yamaguchi 744-8611 (JP)
(74) Representative: Hoffmann Eitle
(86) International application number: PCT/JP2023/000473
(87) International publication number: WO 2023/136265

(57) **Abstract**

[Object]

To provide a surface-treated aluminum sheet having all of corrosion resistance, formability, and resin adhesion.

[Solving Means]

A surface-treated aluminum sheet includes an aluminum base material and an amorphous layer formed on at least one side of the aluminum base material. The aluminum base material is an aluminum sheet or an aluminum alloy sheet. The amorphous layer contains aluminum hydroxide, has an oxygen element to aluminum element (O/Al) ratio in a range of 1.7 to 3.0, and has a thickness of 1 nm or greater. As an alternative, a surface-treated aluminum sheet includes an aluminum base material and a surface treatment layer formed on at least one side of the aluminum base material. The aluminum base material is an aluminum sheet or an aluminum alloy sheet. The surface treatment layer contains aluminum hydroxide, and has a Pa/Pb value of 6.0 or smaller when, in an infrared absorption spectrum measured by FT-IR, the height of an absorbance peak at wavenumbers of 850 to 1000 cm⁻¹ is defined as Pa and the height of an absorbance peak at wavenumbers of 1000 to 1200 cm⁻¹ is defined as Pb.

## Description

### [Technical Field]

The present invention relates to a surface-treated aluminum sheet, a resin-coated surface-treated aluminum sheet, and a molded body.

### [Background Art]

As surface-treated aluminum sheets for application to food cans, beverage cans, and the like, surface-treated aluminum sheets by chromate phosphate treatment have conventionally been produced. As surface-treated aluminum sheets for application to electric home appliance parts, construction structural members, and the like, surface-treated aluminum sheets by chromate conversion coating are also produced. In view of regulations for hexavalent chromium in recent years, what are generally called chromium-free surface-treated aluminum sheets are also known.

In PTL 1 to PTL 7 listed below as examples, treatment that forms aluminum hydroxide called "boehmite" on a surface of an aluminum base material is disclosed as chromium-free surface treatment.

### [Citation List]

### [Patent Literature]

[PTL 1]
   Japanese Patent Laid-open No. 50-158539
[PTL 2]
   Japanese Patent Laid-open No. 50-158536
[PTL 3]
   Japanese Patent Laid-open No. Hei11-12762
[PTL 4]
   Japanese Patent Laid-open No. Hei11-163485
[PTL 5]
   Japanese Patent Laid-open No. 2003-13253
[PTL 6]
   Japanese Patent Laid-open No. 2004-216801
[PTL 7]
   Japanese Patent Laid-open No. 2007-176072

### [Summary]

### [Technical Problems]

For chromium-free surface-treated aluminum sheets, performance equal to or higher than that available from chromate phosphate treatment or chromate conversion coating is required. Specifically, corrosion resistance, followability to forming work (formability), adhesion between a surface treatment layer and a coating film (hereinafter also called "resin adhesion"), and the like are required.

In general, the above-mentioned boehmite is used in sealing treatment for anodized aluminum films, and is known as a material having corrosion resistance. Boehmite is also known for its acicular texture having ruggedness on the surface. Owing to this acicular texture, boehmite is considered to exhibit the mechanical interlocking adhesion with respect to a resin layer such as a coating film or a film, and hence to improve the resin adhesion.

Meanwhile, a coating film that contains aluminum hydroxide such as boehmite is typically obtained by treatment that immerses an aluminum base material in hot water or exposes it to steam or superheated steam. To obtain the above-mentioned acicular texture, there is a need to lengthen the treatment time period. The above-mentioned treatment hence has not conventionally been applied to a production line which continuously feeds sheets and requires short-time treatment. For the above-described treatment time, the above-mentioned treatment also involves a problem that no reduction in cost can be realized.

Further, the above-mentioned acicular texture is a brittle texture, and hence also has a problem that a surface-treated aluminum sheet having such an acicular texture cannot sufficiently follow metal pressing such as drawing and ironing.

For chromium-free surface-treated aluminum sheets, performance equal to or higher than that available from chromate phosphate treatment or chromate conversion coating is required. Specifically, corrosion resistance, followability to forming work (formability), adhesion between a surface treatment layer and a resin layer (hereinafter also called "resin adhesion"), and the like are required.

In a chromium-free surface-treated aluminum sheet, an aluminum hydroxide film formed on a surface of an aluminum base material is considered to be a film primarily including alumina monohydrate (AlO(OH)) called "boehmite." Boehmite is mainly used in sealing treatment for anodized aluminum films, and is known as a material having corrosion resistance. Boehmite is also known for its acicular texture having ruggedness on the surface. This acicular texture is considered to exhibit the Owing to this acicular texture, boehmite is considered to exhibit the mechanical interlocking adhesion with respect to a resin layer such as a coating film or a film, and hence to improve the resin adhesion. with respect to a resin layer such as a coating film or a film, and hence to improve the resin adhesion.

Meanwhile, amorphous alumina (Al₂O₃) or crystalline alumina (Al₂O₃) is contained in the aluminum hydroxide film of boehmite or the like depending on the conditions for the treatment of the film. Different from crystalline alumina, amorphous alumina is known to be dissolved in a short period of time when immersed in hot water.

If water-soluble amorphous alumina is contained in a high proportion in the aluminum hydroxide film existing between the aluminum base material and the resin layer, no sufficient resin adhesion is considered to be available because an adhesive surface for the resin is dissolved by hot water treatment such as retort treatment. There is hence a problem that, even if aluminum hydroxide films have the same acicular texture and thickness in the appearance, large differences may arise in resin adhesion depending on the proportion of amorphous alumina in each film. Even among aluminum hydroxide films formed by the same treatment method, there is also a problem that substantial differences may arise in resin adhesion as the proportion of amorphous alumina in each film varies by a slight change in the quality of water when treated. These problems disturb stable production of aluminum hydroxide film treatment, thereby causing reductions in product quality and yield.

From the viewpoint of resin adhesion and with the above-described problems in view, the present inventors, in this disclosure, decided to place focus on not only the above-mentioned the mechanical interlocking adhesion by an acicular texture but also the proportion of amorphous alumina in a film.

It was then found that, even if the thickness of an aluminum hydroxide film is thin, sufficient resin adhesion is obtained by controlling the amount of amorphous alumina to that of aluminum hydroxide in the film. This finding has led to the present invention.

With a view to solving such problems, the present invention has as an object thereof the provision of a surface-treated aluminum sheet having all of corrosion resistance, formability, and resin adhesion. The present invention also has as other objects thereof the provision of a resin-coated surface-treated aluminum sheet using the surface-treated aluminum sheet, and a molded body.

### [Solution to Problems]

To solve the problems exemplified above, a surface-treated aluminum sheet in an embodiment of the present invention (1) includes an aluminum base material, and an amorphous layer formed on at least one side of the aluminum base material, the aluminum base material is an aluminum sheet or an aluminum alloy sheet, and the amorphous layer contains aluminum hydroxide, has an oxygen element to aluminum element (O/Al) ratio in a range of 1.7 to 3.0, and has a thickness of 1 nm or greater.

In the (1) described above, preferably, (2) the surface-treated aluminum sheet further includes a crystalline layer formed on the amorphous layer, and the crystalline layer contains aluminum hydroxide, has an oxygen element to aluminum element (O/Al) ratio in a range of 1.7 to 3.0, and has a thickness of 5 nm or greater.

In the (2) described above, preferably, (3) the thickness of the crystalline layer is 20 times or less the thickness of the amorphous layer.

To solve the problems exemplified above, a resin-coated surface-treated aluminum sheet in another embodiment of the present invention, the resin-coated surface-treated aluminum sheet (4) further has a resin layer on the surface-treated aluminum sheet of any one of the (1) to (3) described above, and the resin layer is a thermoplastic resin layer or a thermosetting resin layer.

To solve the problems exemplified above, a molded body in a further embodiment of the present invention preferably includes (5) the surface-treated aluminum sheet described in any one of the (1) to (3) described above, or the resin-coated surface-treated aluminum sheet described in the (4) described above.

In the (5) described above, preferably, (6) the molded body is one of a container, a lid, or a structural member.

To solve the problems exemplified above, a surface-treated aluminum sheet in a still further embodiment of the present invention (7) includes an aluminum base material, and a surface treatment layer formed on at least one side of the aluminum base material, the aluminum base material is an aluminum sheet or an aluminum alloy sheet, and the surface treatment layer contains aluminum hydroxide, and has a Pa/Pb value of 6.0 or smaller when, in an infrared absorption spectrum measured by FT-IR (Fourier transformation infrared spectrometer), the height of an absorbance peak at wavenumbers of 850 to 1000 cm⁻¹ is defined as Pa, and the height of an absorbance peak at wavenumbers of 1000 to 1200 cm⁻¹ is defined as Pb.

In the (7) described above, preferably, (8) the surface treatment layer has a thickness of 1 to 2000 nm.

To solve the problems exemplified above, a resin-coated surface-treated aluminum sheet in an even further embodiment of the present invention (9) further has a resin layer on the surface-treated aluminum sheet of the (7) or (8) described above, and the resin layer is a thermoplastic resin layer or a thermosetting resin layer.

To solve the problems exemplified above, a molded body in a yet even further embodiment of the present invention (10) preferably includes the surface-treated aluminum sheet described in the above (7) or (8), or the resin-coated surface-treated aluminum sheet described in the above (9).

In the (10) described above, preferably, (11) the molded body is one of a container, a lid, or a structural member.

### [Advantageous Effect of Invention]

According to the present invention, a surface-treated aluminum sheet having all of corrosion resistance, formability, and resin adhesion can be provided.

### [Brief Description of Drawing]

[FIG. 1]

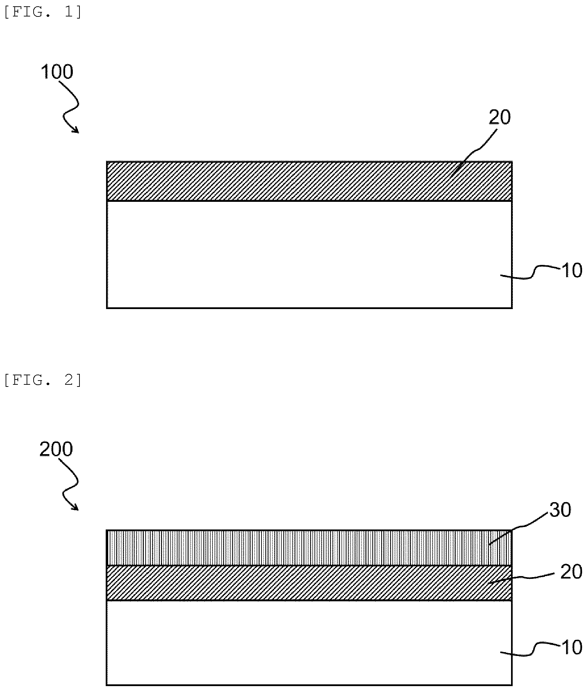

   FIG. 1 is a diagram schematically depicting a surface-treated aluminum sheet of a first embodiment of the present invention.
[FIG. 2]
   FIG. 2 is a diagram schematically depicting a surface-treated aluminum sheet of a second embodiment of the present invention.
[FIG. 3]

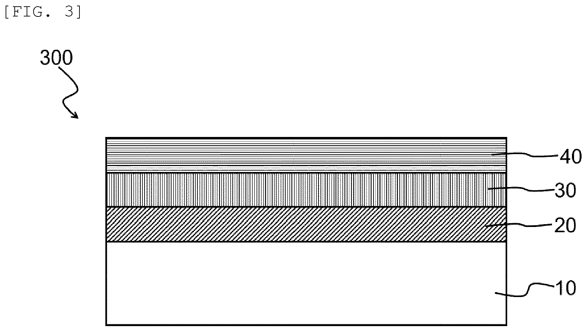

   FIG. 3 is a diagram schematically depicting a resin-coated surface-treated aluminum sheet of an embodiment of the present invention.
[FIG. 4]

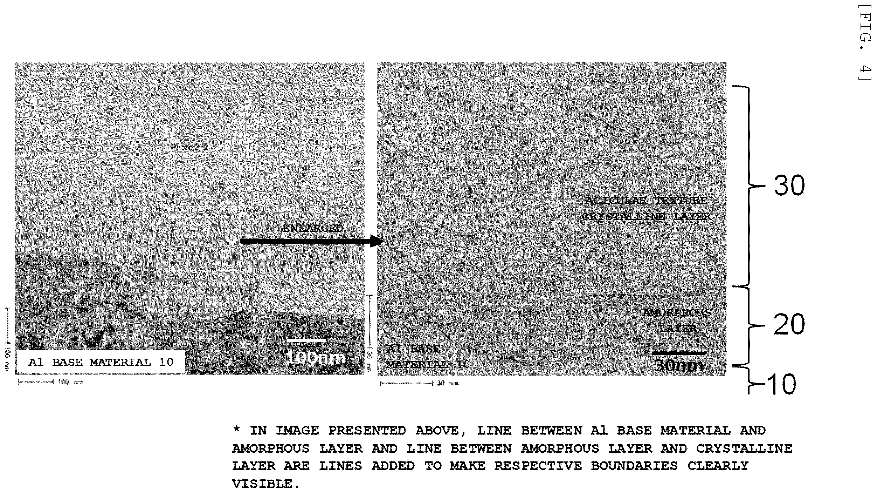

   FIG. 4 includes images presenting TEM (transmission electron microscope) cross-sectional images of the surface-treated aluminum sheet of the second embodiment of the present invention.
[FIG. 5]

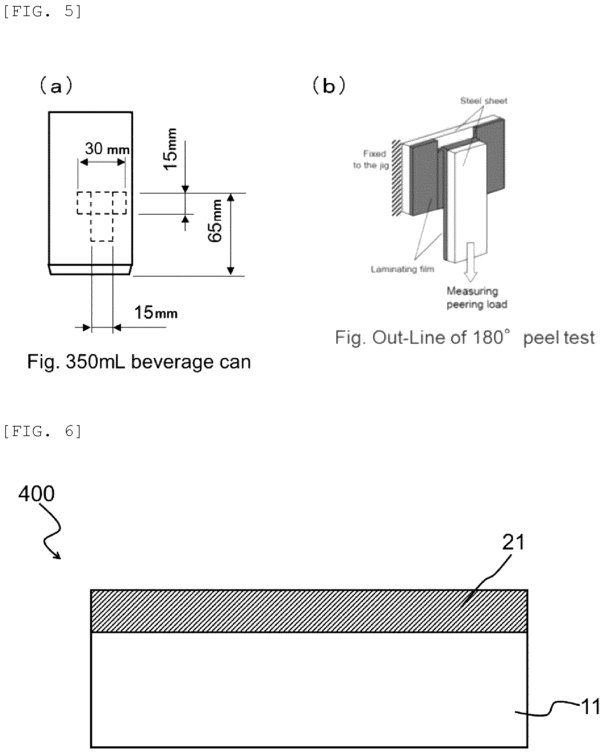

   FIG. 5 depicts schematic diagrams for illustrating a test and evaluation method in Examples of the present invention.
[FIG. 6]
   FIG. 6 is a diagram schematically depicting a surface-treated aluminum sheet in an embodiment of the present invention.
[FIG. 7]

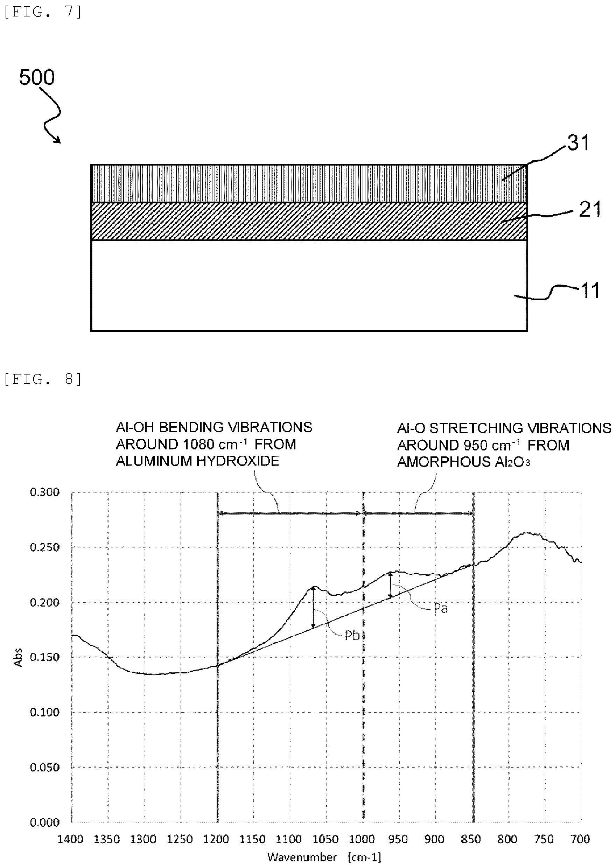

   FIG. 7 is a diagram schematically depicting a resin-coated surface-treated aluminum sheet in another embodiment of the present invention.
[FIG. 8]
   FIG. 8 is a schematic diagram for illustrating a measurement method of absorbance peak heights Pa and Pb in an FT-IR infrared absorption spectrum in the present invention.
[FIG. 9]

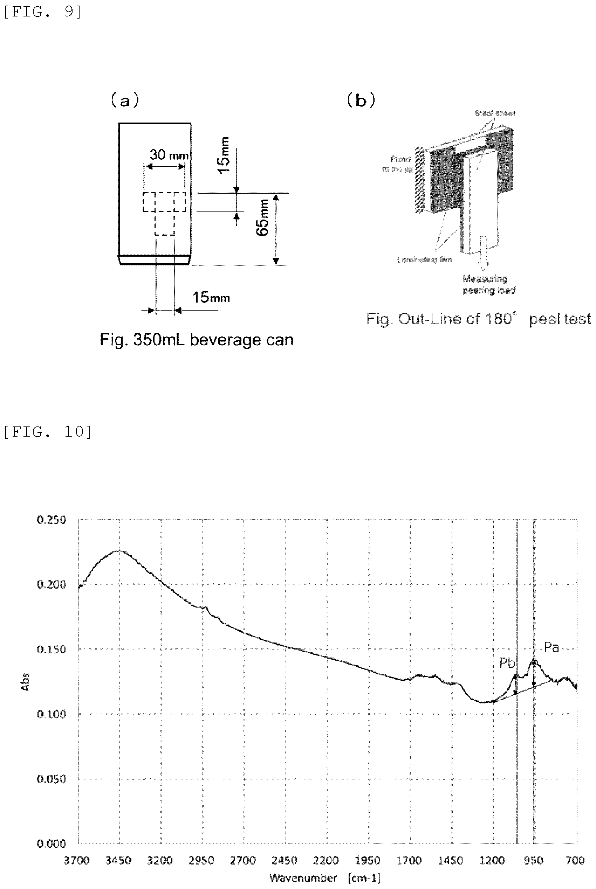

   FIG. 9 depicts schematic diagrams for illustrating a test and evaluation method in other Examples of the present invention.
[FIG. 10]
   FIG. 10 is a diagram presenting an infrared absorption spectrum in Example 12.
[FIG. 11]

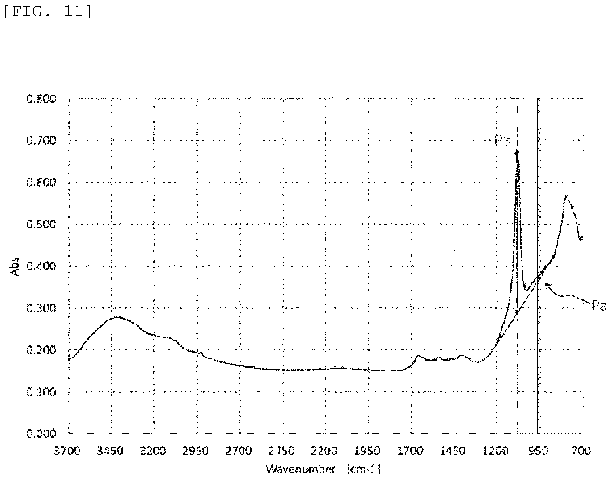

   FIG. 11 is a diagram presenting an infrared absorption spectrum in Example 13.
[FIG. 12]

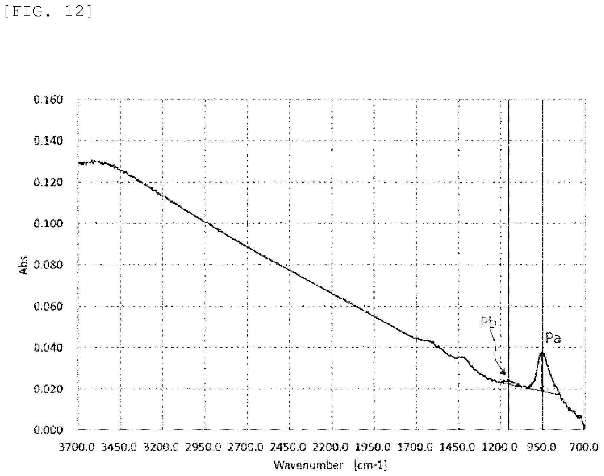

   FIG. 12 is a diagram presenting an infrared absorption spectrum in Comparative Example 4.

### [Description of Embodiments]

### <Surface-treated Aluminum Sheet 100>

A description will hereinafter be made of embodiments for practicing the surface-treated aluminum sheet of the present invention. FIG. 1 is a diagram schematically depicting an embodiment of the surface-treated aluminum sheet of the present invention.

A surface-treated aluminum sheet 100 of this embodiment includes an aluminum base material 10 and an amorphous layer 20 formed on at least one side of the aluminum base material 10. It is to be noted that the surface-treated aluminum sheet 100 depicted in FIG. 1 has the amorphous layer 20 on one side thereof, but without being limited to this, may have the amorphous layer 20 on each side of the aluminum base material 10.

### <Aluminum Base Material 10>

In the surface-treated aluminum sheet 100 of this embodiment, a pure aluminum sheet or an aluminum alloy sheet can be used as the aluminum base material 10. The alloy type of the aluminum base material is selected according to the application. As a container or lid material, for example, a 3000 series or 5000 series aluminum alloy sheet of the JIS standards is used from the viewpoints of workability, strength, and corrosion resistance. As structural members of automobiles or the like, in contrast, a 6000 series or 7000 series aluminum alloy sheet is used according to the application.

### <Amorphous Layer 20>

In the surface-treated aluminum sheet 100 of this embodiment, the amorphous layer 20 is characterized in containing aluminum hydroxide and having the oxygen element to aluminum element (O/Al/O) ratio in a range of 1.7 to 3.0 and a thickness of 1 nm or greater.

The amorphous layer 20 in this embodiment contains aluminum hydroxide. Aluminum hydroxide that is contained in the amorphous layer 20 in this embodiment preferably includes alumina monohydrate (AlO(OH)) and alumina trihydrate (Al(OH)₃). By the inclusion of alumina monohydrate and alumina trihydrate as aluminum hydroxide, the amorphous layer 20 can be improved in corrosion resistance, formability, and resin adhesion. The formation method of the amorphous layer 20 is not particularly limited to any kind, and the amorphous layer 20 can be formed, for example, by immersing an aluminum base material for 0.1 to 20 seconds in an alkali solution of pH 8 to 13 heated at 30°C to 100°C, and then rinsing it with water of 5°C to 100°C. It is to be noted that the formation method of the amorphous layer 20 will be described in detail later.

The film which contains aluminum hydroxide in the amorphous layer 20 in this embodiment also has an amorphous structure. It is to be noted that the term "amorphous structure" in this embodiment represents a state in which no lattice fringe is observed in a TEM (transmission electron micrograph) cross-sectional image. This lattice fringe appears when an image is formed with two waves of a transmitted wave of an electron beam emitted from a crystal and a diffracted wave from certain lattice planes of the crystal, and is an image of bright and dark stripes corresponding to the interplanar spacing of the crystal lattice. If a film has a crystalline structure, this lattice fringe is observed in a TEM cross-sectional image at a microarea in the film that meets the above-mentioned diffraction conditions. If a film has an amorphous structure, however, the above-mentioned diffraction conditions are not met, so that no lattice fringe is observed in the film.

In general, a film which has been formed on a surface of aluminum or an aluminum alloy by treatment of immersion in hot water or exposure to steam or superheated steam and contains aluminum hydroxide such as boehmite has a thickness of approximately 500 to 3,000 nm, and a texture having ruggedness called "acicularity" or "feathery" is observed in a TEM cross-sectional image. This acicular texture has a crystalline structure, and the above-mentioned lattice fringe is observed in the TEM cross-sectional image. Meanwhile, this acicular texture is not observed in the amorphous layer 20 in this embodiment, the amorphous layer 20 has an amorphous structure, and the above-mentioned lattice fringe is not observed in the TEM cross-sectional image.

In this embodiment, the thickness of the amorphous layer 20 contributes to improvement in corrosion resistance, formability, and resin adhesion if it is 1 nm or greater, with 3 nm or greater being more preferred, and 6 nm or greater being still more preferred. Meanwhile, the thickness upper limit of the amorphous layer 20 has no particular limitation, but from the viewpoints of treatment time and the like, 1,000 nm or smaller is preferred, with 500 nm or smaller being more preferred.

Conventionally, the resin adhesion of aluminum hydroxide represented by boehmite has been considered to be brought about by the mechanical interlocking adhesion of acicular or feathery ruggedness. While one of the factors that improve the resin adhesion is the mechanical interlocking adhesion, when studied in more detail, it was found that the possession of water-insoluble or less water-soluble property by aluminum hydroxide also makes a significantly contribution to the resin adhesion. If the front layer of the aluminum base material is a naturally formed, water-soluble film, the film on the surface of the aluminum base material, upon arrival of water at an adhesion interface with the resin, is dissolved, so that the resin layer is readily separated from the base material. As thermal sterilization with hot water or steam is performed especially on beverage cans, food cans, or the like in a process of filling contents, the separation of the resin layer with water becomes more pronounced. A similar separation phenomenon also occurs on structural members and the like that are used under a high temperature and humidity environment. By changing the front layer of the aluminum base material to a film which contains water-insoluble or less water-soluble aluminum hydroxide, as a countermeasure, the adhesion interface is allowed to remain, enabling substantial improvement of the resin adhesion.

In treatment, such as boehmite treatment, for forming aluminum hydroxide, the acicular texture of aluminum hydroxide has conventionally been considered essential for improving the resin adhesion. A treatment time of approximately 30 to 120 seconds has hence been needed to allow sufficient growth of the acicular texture. With focus placed on such properties that aluminum hydroxide is insoluble or less soluble in water, the present inventors thought that even with an extremely thin film of approximately 1 to 10 nm generated and formed in an initial extremely short period of time of approximately 0.1 to 2 seconds upon formation of a film containing aluminum hydroxide, the resin adhesion could be improved. When confirmed by actually conducting a test, results, as expected, were obtained, leading to such a discovery that, even with a film of approximately 1 to 10 nm containing aluminum hydroxide in an initial stage of film formation, the resin adhesion is substantially improved. The film that was obtained at that time and contained aluminum hydroxide was found to be an amorphous layer having no acicular texture, and to have very excellent formability for being the amorphous layer. By this mechanism, it was also possible to obtain good results in resin adhesion after forming.

In this embodiment, the oxygen element to aluminum element (O/Al) ratio of the amorphous layer 20 is in the range 1.7 to 3.0. It is to be noted that the (O/Al) ratio is determined by specifying the amorphous layer from the TEM cross-sectional image, and performing energy dispersion X-ray spectroscopy (EDS) of a center area of the layer.

It is known that, in general, the (O/Al) ratio of aluminum oxide (Al₂O₃) is approximately 1.5, the (O/Al) ratio of alumina trihydrate (Al(OH)₃) is approximately 3.0, and the (O/Al) ratio of alumina monohydrate (AlO(OH)) is approximately 2.0. To obtain corrosion resistance, formability, and resin adhesion as required, there is a need to control the (O/Al) ratio of the amorphous layer 20 in the range of 1.7 to 3.0 in this embodiment.

The amorphous layer 20 in this embodiment is substantially free of phosphorus and chromium. Meanwhile, the amorphous layer 20 in this embodiment contains alumina monohydrate and alumina trihydrate as aluminum hydroxide. Further, the above-mentioned aluminum oxide (Al₂O₃) may also be contained as a compound other than those mentioned above. Moreover, extremely trace compounds that are present in the treatment solution, for example, silicon dioxide (SiO₂), magnesium oxide (MgO), and the like, may also be contained. What is important in this embodiment is to control the (O/Al) ratio of the amorphous layer 20 in the range of 1.7 to 3.0.

As mentioned above, what is important in this embodiment is to form the front layer film of the surface-treated aluminum sheet as a film insoluble or less soluble in water. Aluminum hydroxide is considered to be formed when water and active metal aluminum come into contact, and the film so formed remains in an extremely stable state in water. The film so formed is thus insoluble or less soluble in water. If the film with the thus-formed aluminum hydroxide contained therein abundantly contains alumina trihydrate, the (O/Al) ratio takes a value close to 3.0. Further, if the film with the thus-formed aluminum hydroxide contained therein abundantly contains alumina monohydrate, on the other hand, the (O/Al) ratio takes a value close to 2.0. If aluminum oxide (Al₂O₃) the (O/Al) ratio of which is around 1.5 is contained, the (O/Al) ratio of the whole film takes a smaller value as the proportion of aluminum oxide in the film increases. If the proportion of aluminum oxide in the film increases, the film dissolves more easily in water despite being a film containing aluminum hydroxide, so that required corrosion resistance and resin adhesion are no longer available. This applies equally to a case where a compound of a different element is abundantly contained.

From the results of a test conducted by the present inventors, it is preferred to control the (O/Al) ratio of the whole film of the amorphous layer 20 in the range of 1.7 to 3.0 in order to obtain sufficient corrosion resistance and resin adhesion. Since corrosion resistance and resin adhesion are improved as the proportion of alumina monohydrate, rather than alumina trihydrate, increases in the aluminum hydroxide contained in the film, the (O/Al) ratio is controlled preferably in a range of 1.8 to 2.6, more preferably in a range of 1.9 to 2.2. One possible reason for this is that alumina monohydrate is thermally more stable than alumina trihydrate, and hence, its insolubility is allowed to remain stably even in water of high temperature.

### <Surface-treated Aluminum Sheet 200>

With regard to the surface-treated aluminum sheet of the present invention, a further description will next be made based on the following second embodiment. FIG. 2 is a diagram schematically depicting a surface-treated aluminum sheet 200 according to the second embodiment. In short, the surface-treated aluminum sheet 200 according to the second embodiment is primarily different from that of the first embodiment in that a crystalline layer 30 is formed on an amorphous layer 20. Hence, common elements are identified by the same reference signs, and their description is omitted.

It is to be noted that the amorphous layer 20 and the crystalline layer 30 are formed on one side on an aluminum base material 10 in FIG. 2 although not limited to this configuration. For example, the amorphous layer 20 and the crystalline layer 30 may be formed on each side of the aluminum base material. As an alternative, the surface-treated aluminum sheet 200 may be in a form that the amorphous layer 20 and the crystalline layer 30 are both formed on the one side of the aluminum base material 10, and only the amorphous layer 20 is formed on the other side. As a further alternative, the amorphous layer 20 and the crystalline layer 30 are formed on the one side of the aluminum base material 10, and one or more known metal layers and/or resin layers may be formed on the other side.

### <Crystalline Layer 30>

In the surface-treated aluminum sheet 200 according to this embodiment, the crystalline layer 30 is formed on the amorphous layer 20. Similar to the amorphous layer 20, the crystalline layer 30 is formed as a film with aluminum hydroxide contained therein. Forms of aluminum hydroxide include alumina monohydrate and alumina trihydrate, and the oxygen element to aluminum element (O/Al) ratio of the crystalline layer 30 is in the range of 1.7 to 3.0.

The crystalline layer 30 in this embodiment is substantially free of phosphorus and chromium. Meanwhile, the crystalline layer 30 in this embodiment may contain the above-mentioned aluminum oxide (Al₂O₃) in addition to alumina monohydrate and alumina trihydrate. Further, extremely trace compounds that are present in the treatment solution, for example, silicon dioxide (SiO₂), magnesium oxide (MgO), and the like, may also be contained. What is important in this embodiment is to control the (O/Al) ratio of the crystalline layer 30 in the range of 1.7 to 3.0.

When the crystalline layer 30 is cross-sectionally observed on an enlarged scale under TEM or SEM (scanning electron microscope), acicular or feathery ruggedness is observed. FIG. 4 contains TEM cross-sectional images presenting examples of the amorphous layer 20 and the crystalline layer 30 in this embodiment. The amorphous layer 20 formed on the aluminum base material 10 has a dense texture, and the crystalline layer 30 having an acicular texture is formed thereon. As described above, the film that contains aluminum hydroxide in the crystalline layer 30 has the acicular texture, and a structure clearly different from that of the amorphous layer 20 is observed in the cross-sectional image. It is to be noted that, in FIG. 4, a line between the aluminum base material 10 and the amorphous layer 20 and a line between the amorphous layer 20 and the crystalline layer 30 are lines added to make respective boundaries visible clearly.

Whether the film that contains aluminum hydroxide in the crystalline layer 30 in this embodiment has the crystalline structure can be determined depending on whether a lattice fringe is observed in the TEM cross-sectional image. The lattice fringe is observed if it is a crystalline layer. This lattice fringe appears when an image is formed with two waves of a transmitted wave of an electron beam emitted from a crystal and a diffracted wave from certain lattice planes of the crystal, and is an image of bright and dark stripes corresponding to the interplanar spacing of the crystal lattice. If a film has a crystalline structure, this lattice fringe is observed in a TEM cross-sectional image at a microarea in the film that meets the above-mentioned diffraction conditions. If a film has an amorphous structure, however, the above-mentioned diffraction conditions are not met, so that no lattice fringe is observed in the film.

It is to be noted that the TEM cross-sectional images of FIG. 4 are results of an observation at 1 million times magnification, but the existence or absence of the above-mentioned lattice fringe cannot be determined at this magnification. An observation of a lattice fringe, which is to be performed for the determination of the existence or absence of a crystalline structure in the film, needs to be performed by increasing the magnification to 2 million times or more.

In this embodiment, the thickness of the crystalline layer 30 is 5 nm or greater, preferably 25 nm or greater, more preferably 50 nm or greater. Meanwhile, the thickness upper limit of the crystalline layer 30 has no particular limitation, but from the viewpoints of treatment time and cost, 400 nm or smaller is preferred, with 200 nm or smaller being more preferred.

This crystalline layer 30 has a role to improve the resin adhesion based on the mechanical interlocking adhesion by the acicular or feathery ruggedness. It is not necessary to make the crystalline layer 30 thicker than needed, because this mechanical interlocking adhesion does not rely upon the thickness of the film but relies upon the roughness of the film surface. If the crystalline layer 30 is made thicker beyond needed, the treatment time becomes longer, leading to a decrease in productivity and an increase in cost. To the extent that has been confirmed through a test by the present inventors, it has been found that at 5 nm or greater as the thickness of the crystalline layer 30, the mechanical interlocking adhesion is obtained, and the resin adhesion is improved, but at around 200 nm, the improving effect for the resin adhesion comes to saturation, and at 400 nm or greater, the resin adhesin is not improved. If increased further to 500 nm or greater, the crystalline layer 30 can no longer follow forming, and hence undergoes a cohesive failure when worked, raising a problem that the resin adhesion is lowered conversely.

As the ratio of the crystalline layer 30 to the amorphous layer 20 in this embodiment, the thickness of the crystalline layer 30 is preferably 20 times or less than that of the amorphous layer 20. Since an amorphous layer is excellent in formability as mentioned above, the amorphous layer 20 follows forming even if a large deformation is applied, for example, through drawing and ironing, so that the amorphous layer 20 can evenly cover the surface of the worked portion. Meanwhile, the acicular texture of the crystalline layer 30 is crystalline, so that the crystalline layer 30 cannot follow forming, and is worked while developing film cracks. Upon observation of the surface of the aluminum sheet after its drawing and ironing, the crystalline layer 30 was found to exist in a partially disintegrated state, and upon observation of its cross-section, a large difference in level was found to be produced between a portion where the crystalline layer 30 remained and another portion where the crystalline layer 30 did not remain.

Upon an examination of this phenomenon in further detail, it was found that, if the thickness of the crystalline layer 30 exceeds 20 times that of the amorphous layer 20, the resin layer separates by a difference in level produced between the amorphous layer 20 and the crystalline layer 30 after forming, and the resin adhesion is lowered. The control of the ratio of the crystalline layer 30 to the amorphous layer 20 to the above-described value or smaller is therefore preferred from the viewpoint of ensuring the resin adhesin of the worked portion. More preferably, the above-described thickness ratio is controlled to 15 times or less. It is to be noted that no lower limit exists on the above-described thickness ratio because this issue arises only when the crystalline layer 30 becomes extremely thick relative to the amorphous layer 20.

Further, if the amorphous layer 20 does not exist, in other words, if only the crystalline layer 30 is formed on the aluminum base material, the corrosion resistance and resin adhesion of the worked portion are significantly lowered as there is no layer that can follow forming. In this embodiment, the amorphous layer 20 is thus essential, and owing to the existence of this layer on the aluminum base material, good formability and good corrosion resistance and resin adhesion of the worked portion are obtained.

### <Resin-coated, Surface-treated Aluminum Sheet 300>

With regard to the resin-coated surface-treated aluminum sheet of the present invention, a description will next be made. FIG. 3 is a diagram schematically depicting a resin-coated surface-treated aluminum sheet 300 according to this embodiment. In short, the resin-coated surface-treated aluminum sheet 300 according to this embodiment is primarily different from the surface-treated aluminum sheet of the first embodiment or second embodiment in that a resin layer 40 is formed on an amorphous layer 20 or a crystalline layer 30. Hence, common elements are identified by the same reference signs, and their description is omitted.

It is to be noted that the resin layer 40 is formed on the amorphous layer 20 via the crystalline layer 30 in FIG. 3 although not limited to this configuration. In this embodiment, the resin layer 40 may hence be directly formed on the amorphous layer 20. In this embodiment, the amorphous layer 20 and the resin layer 40 may also be formed on each side of the aluminum base material.

As the material of the resin layer 40 in this embodiment, known resin that is applied to metal base materials can be applied. In particular, thermoplastic resin or thermosetting resin can preferably be applied. Exemplifying the types of thermoplastic resin, one or more of polyolefin resin, polyester resin, polycarbonate resin, acrylic resin, polystyrene resin, ABS resin, polyamide resin, fluorinated resin, polyvinyl chloride resin, and the like can preferably be applied. Exemplifying the types of thermosetting resin, in contrast, one or more of acrylic resin, unsaturated polyester resin, phenol resin, urea resin, polyurethane resin, silicone resin, polyimide resin, melamine resin, epoxy resin, and the like can preferably be applied.

Among the types of thermoplastic resin, polyolefin resin or polyester resin and their blends can be applied more preferably. Exemplifying the types of polyolefin resin, one or more of polyethylene resin, polypropylene resin, ethylene-propylene copolymer resin, ethylene-acrylic acid ester copolymer resin, ionomer resin, and the like can preferably be applied. Exemplifying the types of polyester resin, one or more of polyethylene terephthalate resin, polybutylene terephthalate resin, polyethylene terephthalate resin with polyethylene isophthalate copolymerized therewith, polybutylene terephthalate resin with polybutylene isophthalate copolymerized therewith, and the like can be preferably applied. As the resin layer 40, polyester resin can be applied more preferably.

The resin layer 40 may be a multilayer resin layer. For example, a two-layer polyethylene terephthalate resin layer in which polyethylene isophthalate has been copolymerized at different ratios or the like can be used. Further, the resin layer 40 may also be a resin layer in which different types of resin have been blended. For example, a resin layer in which ionomer resin or ethylene-propylene copolymer resin has been blended with polyethylene terephthalate resin, a resin layer in which polyethylene terephthalate resin and polybutylene terephthalate resin have been blended, or the like can also be applied.

To the resin layer 40, known resin additives, for example, an antiblocking agent such as amorphous silica, an inorganic filler such as calcium carbonate, magnesium carbonate, talc, or glass, various kinds of fibers such as glass fibers, carbon fibers, or aramid fibers, an antistatic agent, an antioxidant such as tocopherol, an ultraviolet absorber, and the like can be added according to a known method.

The thickness of the resin layer 40 is not particularly limited to any value, but, in the case of thermoplastic resin, is preferably in a range of 3 to 300 um, with a range of 5 to 230 um being more preferred. In the case of thermosetting resin, it is preferably in a range of 0.5 to 100 um, with a range of 1 to 50 um being more preferred. In general, as the resin layer becomes thicker, the corrosion resistance is improved, but the resin adhesion and the formability are lowered. There is hence an optimal thickness range according to the application. It is to be noted that a formation method of the resin layer 40 will be described later.

### <Surface-treated Aluminum Sheet 400>

A description will hereinafter be made of an embodiment for realizing the surface-treated aluminum sheet of the present invention. FIG. 6 is a diagram schematically depicting an embodiment of the surface-treated aluminum sheet of the present invention.

A surface-treated aluminum sheet 400 of this embodiment includes an aluminum base material 11 and a surface treatment layer 21 formed on at least one side of the aluminum base material 11. It is to be noted that the surface-treated aluminum sheet 400 depicted in FIG. 6 has the surface treatment layer 21 on one side. However, without being limited to this configuration, it may have the surface treatment layer 21 on each side of the aluminum base material 11.

<Aluminum Base Material 11>

In the surface-treated aluminum sheet 400 of this embodiment, a pure aluminum sheet or an aluminum alloy sheet can be used as the aluminum base material 11. The alloy type of the aluminum base material is selected according to the application. As a container or lid material, for example, a 3000 series or 5000 series aluminum alloy sheet of the JIS standards is used from the viewpoints of workability, strength, and corrosion resistance. As structural members of automobiles or the like, a 6000 series or 7000 series aluminum alloy sheet is used depending on the application.

### <Surface Treatment Layer 21>

The surface treatment layer 21 contains aluminum hydroxide. Aluminum hydroxide includes alumina monohydrate (AlO(OH), alumina trihydrate (Al(OH)₃), and the like. By the inclusion of these substances, corrosion resistance, resin adhesion, and the like can be improved. Aluminum hydroxide in the surface treatment layer 21 can be identified by a peak that appears in a wavenumber range of 1000 to 1200 cm⁻¹ in an infrared absorption spectrum measured by FT-IR. This peak that appears in the wavenumber range of 1000 to 1200 cm⁻¹ is known to be an absorbance peak associated with Al-OH bending vibrations originated from aluminum hydroxide.

In the surface treatment layer 21, amorphous alumina (Al₂O₃) can also be contained. The amorphous alumina in the surface treatment layer 21 can be identified by a peak that appears in a wavenumber range of 850 to 1000 cm⁻¹ in the infrared absorption spectrum measured by FT-IR. This peak that appears in the wavenumber range of 850 to 1000 cm⁻¹ is known to be an absorbance peak originated from Al-OH stretching vibrations of amorphous alumina. It is to be noted, that in this embodiment, the content of amorphous alumina may be extremely close to zero insofar as the below-mentioned peak ratio is 6.0 or smaller.

This embodiment is characterized in that the above-described proportion of amorphous alumina is specified in the surface treatment layer 21. More specifically, this embodiment is to maintain the insoluble or less soluble property of the surface treatment layer 21 and hence to control the resin adhesion of the surface treatment layer 21, irrespective of the thickness of the surface treatment layer 21, by specifying the proportion of amorphous alumina in terms of its ratio to aluminum hydroxide.

The surface-treated aluminum sheet 400 of this embodiment is characterized in that the value of the peak ratio "Pa/Pb" is 6.0 or smaller when, in the infrared absorption spectrum of the surface treatment layer 21 as measured by FT-IR, the height of the absorbance peak at the wavenumbers of 850 to 1000 cm⁻¹ is defined as "Pa" and the height of the absorbance peak at the wavenumbers of 1000 to 1200 cm⁻¹ is defined as "Pb."

As described above, physical properties of the surface treatment layer 21 can be confirmed by the infrared absorption spectrum measured by FT-IR. As a result of a diligent study by the present inventors, it has been found that performance equal to or higher than that available from chromate phosphate treatment or chromate conversion coating described above is obtained if the value of the above-described ratio "Pa/Pb" is 6.0 or smaller.

It is for the following reasons that the present inventors placed focus on the proportion of amorphous alumina in the surface treatment layer 21. Specifically, conventionally known films of aluminum hydroxide such as boehmite have an acicular texture on their surfaces, and are considered to be improved in resin adhesion owing to the exhibition of the mechanical interlocking adhesion with respect to resin layers such as coating films or films by the acicular texture. For the exhibition of this mechanical interlocking adhesion, there is a need to allow an acicular texture, which is to be formed on the surface of an aluminum hydroxide film, to grow to a sufficient thickness. For this need, it has hence been considered necessary to make longer the treatment time for the formation of the film.

Meanwhile, the present inventor thought that, even with an aluminum hydroxide film in an initial stage of formation as formed in a short treatment time of approximately 0.5 to 30 seconds without sufficient growth of the above-described acicular texture of boehmite, sufficient resin adhesion could be exhibited by the insoluble or less soluble property of aluminum hydroxide by a decreased amount of water-soluble amorphous alumina contained in the aluminum hydroxide film. The present inventors also thought that, even with a film containing aluminum hydroxide and formed to a sufficient thickness of 500 nm or greater, the insoluble or less soluble property could not be retained if the proportion of amorphous alumina in the film becomes high. The proportion of amorphous alumina in the film of the surface treatment layer 21 changes with the formation method of the film. Between, for example, a method of treatment by immersion in hot water of 75°C or higher and a method of treatment in steam of 110°C or higher, the proportion of amorphous alumina in the film becomes smaller when treated in steam. Even by the method of treatment by immersion in hot water, the proportion of amorphous alumina becomes smaller as the concentration of phosphorus (P), concentration of calcium (Ca), concentration of silicon (Si), concentration of magnesium (Mg), and concentration of iron (Fe) in water become lower. The important point of the present invention is that, in whatever production method, such performance as sufficient resin adhesion is obtained since the insoluble or less soluble property of the surface treatment layer 21 is retained by the value of the above-described "Pa/Pb" ratio being controlled to the predetermined value or lower. If the value of the above-described "Pa/Pb" ratio is equal to or smaller than the predetermined value, sufficient corrosion resistance and resin adhesin are obtained even with a thin aluminum hydroxide film of approximately 1 to 100 nm in an initial stage of formation. It is therefore possible to produce a surface-treated layer in a short film formation time, and hence to apply a production method that continuously passes sheets as a coil product. An extensive cost reduction can be expected by realization of these.

The above-mentioned infrared absorption spectrum of the thin aluminum hydroxide film formed by the treatment in the short period of time can be measured by the reflection absorption spectroscopy (RAS) method using a known Fourier transformation infrared spectrometer (FT-IR). As a measurement method of the absorbance peaks, absorbance at a wavenumber of 1200 cm⁻¹ and absorbance at a wavenumber of 850 cm⁻¹ in the infrared absorption spectrum are first connected with a straight line, and the straight line is used as a baseline. As the peak originated from Al-O stretching vibrations of amorphous alumina, the highest point from the baseline in the wavenumber range of 850 to 1000 cm⁻¹ is then designated as an absorbance peak height Pa. Further, as the peak originated from Al-OH bending vibrations of aluminum hydroxide, the highest point from the baseline in the wavenumber range of 1000 to 1200 cm⁻¹ is designated as an absorbance peak height Pb.

In this embodiment, a formation method of the surface treatment layer 21 includes, but is not particularly limited to, for example, a method of treatment by immersion in hot water of 75°C to 100°C, a method of treatment in steam of 100°C to 140°C, or the like. If the treatment time is not the matter, the surface treatment layer 21 can also be formed by keeping an aluminum base material in contact for approximately 3 days with a solution of pH 6 to 12 at 25°C, or in a similar manner. As a pre-step of the above-described treatment, it is possible to perform pre-treatment such as spray-immersion treatment, cathodic electrolysis, or the like in an alkali solution. Details of the formation method of the surface treatment layer 21 will be mentioned later.

In this embodiment, the corrosion resistance, the formability, and the resin adhesion are improved if the thickness of the surface treatment layer 21 is 1 nm or greater. Meanwhile, the thickness upper limit of the surface treatment layer 21 is preferably 2,000 nm or smaller from the viewpoints of cohesive failure during forming, treatment time, and the like. The optimal thickness of the surface treatment layer 21 is dependent on the application. If used for containers or lids, however, a range of 10 to 600 nm is preferred, with a range of 20 to 300 nm being more preferred. If used for construction structural members or automobile structural members, in contrast, 50 to 2,000 nm are preferred, with 100 to 1,000 nm being more preferred.

The surface treatment layer 21 in this embodiment is substantially free of phosphorus and chromium. Meanwhile, the surface treatment layer 21 in this embodiment contains alumina monohydrate and alumina trihydrate as aluminum hydroxide as mentioned above. In addition, aluminum oxide (Al₂O₃) may also be contained as a compound other than those mentioned above. The surface treatment layer 21 in this embodiment may also contain extremely trace compounds that are present in the treatment solution, for example, silicon dioxide (SiO₂), magnesium oxide (MgO), and the like.

### <Resin-coated, Surface-treated Aluminum Sheet 500>

With regard to the resin-coated surface-treated aluminum sheet according to this embodiment, a description will next be made using FIG. 7. FIG. 7 is a diagram schematically depicting a resin-coated surface-treated aluminum sheet 500 according to this embodiment. In short, the resin-coated surface-treated aluminum sheet 500 according to this embodiment is primarily different from the surface-treated aluminum sheet of the first embodiment in that a resin layer 31 is formed on a surface treatment layer 21. Hence, common elements are identified by the same reference signs, and their description is omitted.

It is to be noted that the resin layer 31 is formed on the surface treatment layer 21 in FIG. 7 although not limited to this configuration. In this embodiment, the resin layer 31 may hence be formed on the surface treatment layer 21 via a known adhesive layer or the like. In this embodiment, the surface treatment layer 21 and the resin layer 31 may also be formed on each side of the aluminum base material 11.

As the material of the resin layer 31 in this embodiment, known thermoplastic resin or thermosetting resin that is applied to metal base materials can be applied. Exemplifying the types of thermoplastic resin, one or more of polyolefin resin, polyester resin, polycarbonate resin, acrylic resin, polystyrene resin, ABS resin, polyamide resin, fluorinated resin, polyvinyl chloride resin, and the like can preferably be applied. Exemplifying the types of thermosetting resin, one or more of acrylic resin, unsaturated polyester resin, phenol resin, urea resin, polyurethane resin, silicone resin, polyimide resin, melamine resin, epoxy resin, and the like can preferably be applied.

Among the types of thermoplastic resin, polyolefin resin or polyester resin and their blends can be applied more preferably. Exemplifying the types of polyolefin resin, one or more of polyethylene resin, polypropylene resin, ethylene-propylene copolymer resin, ethylene-acrylic acid ester copolymer resin, ionomer resin, and the like can preferably be applied. Exemplifying the types of polyester resin, one or more of polyethylene terephthalate resin, polybutylene terephthalate resin, polyethylene terephthalate resin with polyethylene isophthalate copolymerized therewith, polybutylene terephthalate resin with polyethylene isophthalate copolymerized therewith, and the like can preferably be applied. As the resin layer 31, polyester resin can be applied more preferably.

The resin layer 31 may be a multilayer resin layer. For example, a two-layer polyethylene terephthalate resin layer in which polyethylene isophthalate has been copolymerized at different ratios, or the like can be used. Further, the resin layer 31 may also be a resin layer in which different types of resin have been blended. For example, a resin layer in which ionomer resin or ethylene-propylene copolymer resin has been blended with polyethylene terephthalate resin, a resin layer in which polyethylene terephthalate resin and polybutylene terephthalate resin have been blended, or the like can also be applied.

To the resin layer 31, known resin additives, for example, an antiblocking agent such as amorphous silica, an inorganic filler such as calcium carbonate, magnesium carbonate, talc, or glass, a variety of fibers such as glass fibers, carbon fibers, or aramid fibers, an antistatic agent, an antioxidant such as tocopherol, an ultraviolet absorber, and the like can be added according to a known method.

The thickness of the resin layer 31 is not particularly limited to any value, but in the case of thermoplastic resin, is preferably in the range of 3 to 300 µm, with the range of 5 to 230 um being more preferred. In the case of thermosetting resin, it is preferably in the range of 0.5 to 100 µm, with the range of 1 to 50 um being more preferred. In general, as the resin layer becomes thicker, the corrosion resistance is improved, but the resin adhesion and the formability are lowered. There is hence an optimal thickness range according to the application. It is to be noted that a formation method of the resin layer 31 will be described later.

### <Production Methods of Surface-treated Aluminum Sheets 100, 200>

Next, a description will hereinafter be made of a first production method of the surface-treated aluminum sheet in each embodiment. It is to be noted that the production method presented here in this embodiment is merely an illustrative one, and the production method should not be limited to this method.

As the first production method of the surface-treated aluminum sheet in this embodiment, there is a method that immerses an aluminum base material in an alkali solution of pH 8 to 13 at 30°C to 100°C, and keeps it in contact with the alkali solution for 0.1 to 20 seconds, a method that subjects the aluminum base material to cathodic electrolytic treatment for 0.1 to 10 seconds in an alkali solution of pH 8 to 13 at 30°C to 100°C, a method that subjects the aluminum base material to anodic electrolytic treatment for 0.1 to 10 seconds in the same alkali solution, or the like. By such a treatment method, it is possible to form, on the aluminum base material, an amorphous layer that contains aluminum hydroxide, has an oxygen element to aluminum element (O/Al) ratio in the range of 1.7 to 3.0, and has a thickness of 1 nm or greater.

Specifically, as the treatment solution (alkali solution) for use in the above-described treatment step, an aqueous sodium carbonate solution, an aqueous sodium aluminate solution, an aqueous sodium hydroxide solution, an aqueous potassium hydroxide solution, or the like is preferably used. It is to be noted that, as the water for use in the alkali solution, pure water is preferred, and deionized water having the electrical conductivity of 1 µS/cm or lower is typically used, but tap water or the like having the electrical conductivity of 300 µS/cm or lower can also be used. If calcium carbonate and silicon dioxide are present as impurities in the solution, they act as barriers against the formation of the aluminum hydroxide film, and therefore water from which such impurities have been removed should be used.

The pH of the treatment solution (alkali solution) for use in the above-described treatment step is set preferably to 8 to 13, with pH 8 to 12 being more preferred, and pH 8 to 11 being still more preferred. Substantially no aluminum hydroxide is formed in an acidic solution of pH 6 or lower, and stable formation of a film is possible in water of pH 7 or higher or an alkali solution. The reason that pH 8 or higher is preferred is to dissolve a naturally formed oxide film which exists on the surface of the aluminum base material before the treatment, in an extremely short period of time. In general, a native oxide film on an aluminum base material is a film primarily including aluminum oxide, and can be dissolved in an extremely short time in an alkali solution. For the formation of aluminum hydroxide, there is a need to allow water and an active metal aluminum surface to come into contact with each other. To shorten the treatment time, there is hence a need to have the native oxide film dissolved in an extremely short period of time. If pH exceeds 13, the metal aluminum surface is excessively dissolved, making it difficult to form a film that contains aluminum hydroxide and that is less uneven, homogeneous, and stable. If pH exceeds 11, aluminum hydroxide to be formed is one primarily including alumina trihydrate, making it difficult for alumina monohydrate which is more stable in water of high temperature to be formed. More preferably, the pH is hence 11 or lower from the viewpoint of assuring excellent resin adhesion.

The temperature of the treatment solution (alkali solution) for use in the above-described treatment step is preferably 30°C to 100°C, more preferably 50°C to 100°C, and still more preferably 60°C to 100°C. As the temperature of the treatment solution becomes higher, the native oxide film that exists on the surface of the aluminum base material before the treatment can be dissolved in a shorter period of time.

In the above-described treatment step, the contact between the aluminum base material and the alkali solution is preferably performed by cathodic electrolytic treatment compared with immersion treatment. The application of cathodic electrolytic treatment suppresses localized dissolution of the aluminum base material, thereby enabling formation of a more homogeneous film with aluminum hydroxide contained therein. As the current density for the cathodic electrolytic treatment in this treatment step, it may be set, for example, to 1 to 10 A/dm² or the like.

As a method for forming a homogeneous thick film with aluminum hydroxide contained therein in the above-described treatment step, anodic electrolytic treatment can also be used. As the current density for the anodic electrolytic treatment in this treatment step, it may be set, for example, to 1 to 10 A/dm² or the like.

### <Production Method of Surface-treated Aluminum Sheet 400>

Next, a description will hereinafter be made of a second production method of the surface-treated aluminum sheet in this embodiment. It is to be noted that the production method presented here in this embodiment is merely an illustrative one, and the production method should not be limited to this method.

The second production method of the surface-treated aluminum sheet in this embodiment includes a surface treatment step that forms the surface treatment layer 21 which contains aluminum hydroxide, on the aluminum base material. Here, the surface treatment step forms the surface treatment layer 21 such that the value of Pa/Pb is 6.0 or smaller when, in the infrared absorption spectrum measured by FT-IR, the height of the absorbance peak at the wavenumbers of 850 to 1000 cm⁻¹ originated primarily from Al-O stretching vibrations of amorphous alumina is defined as Pa and the height of the absorbance peak at the wavenumbers of 1000 to 1200 cm⁻¹ originated primarily from Al-OH bending vibrations of aluminum hydroxide is defined as Pb.

The surface treatment step is not particularly limited to any kind if it is a step capable of setting the value of the above-described peak ratio Pa/Pb to 6.0 or smaller. Examples include a method that immerses an aluminum base material in a solution of pH 6 to 13 at 20°C to 100°C, and keeps it in contact with the solution for 0.1 to 30 seconds, a method that brings the aluminum base material into contact with steam of 100°C to 140°C for 0.1 to 120 seconds in the steam, and the like. From the viewpoint of reducing the proportion of amorphous alumina in the surface treatment layer 21, the method of exposure to steam is more preferred than the method of immersion in the solution.

For the above-described surface treatment, the solution of 20°C to 100°C, the steam of 100°C to 140°C, or the like can be used. As the temperature of the treatment solution is higher, the formation of the film which contains aluminum hydroxide becomes faster, and the film can be formed in a still shorter period of time.

When treating the aluminum base material by immersing it in the solution, one in a range of pH 6 to 13 as the pH of the treatment solution can be used. Substantially no aluminum hydroxide is formed in an acidic solution of pH 6 or lower, and stable formation of the film is possible in water of pH 7 or higher or an alkali solution of pH 8 to 13.

The reason why an alkali is used in the surface treatment solution is to dissolve a naturally formed oxide film which exists on the surface of the aluminum base material before the treatment, in an extremely short period of time. In general, a native oxide film on an aluminum base material is a film primarily including aluminum oxide, and can be dissolved in an extremely short period of time in an alkali solution. However, as the pH of the solution becomes higher, the proportion of amorphous alumina in the surface treatment layer 21 increases. A more preferred pH range is therefore pH 8 to 10.

As the surface treatment solution for use in the above-described surface treatment step, pure water can preferably be used. Deionized water having the electrical conductivity of 10 µS/cm or lower may also be used. The reason why pure water or deionized water is preferred is that the proportion of amorphous alumina to be contained in the surface treatment layer 21 becomes higher with the phosphorus concentration, calcium concentration, silicon concentration, magnesium concentration, and iron concentration being higher in the surface treatment solution. If any one of the phosphoric acid concentration, calcium concentration, silicon concentration, magnesium concentration, and iron concentration exceeds 1 ppm, the proportion of amorphous alumina to be contained in the surface treatment layer 21 abruptly increases. It is hence preferred to control the concentrations of these elements to 1 ppm or lower, with 0.1 ppm or lower being more preferred.

If the surface treatment solution for use in the above-described surface treatment step is alkaline (pH 8 to 13), an aqueous sodium carbonate solution, an aqueous sodium aluminate solution, an aqueous sodium hydroxide solution, an aqueous potassium hydroxide solution, or the like is preferably used. It is to be noted that, as the water for use in the alkali solution, the above-mentioned pure water or deionized water is preferred.

As a specific example in a case that uses gas in the surface treatment step, steam or superheated steam can be applied. In this case, the temperature of steam is preferably 100°C to 140°C. Meanwhile, the temperature of superheated steam is preferably 120°C to 350°C. As the temperature is higher, the surface treatment layer 21 can be formed according to the application by treatment in a shorter period of time. In the case of superheated steam, the surface of the aluminum base material becomes wet at the moment of its feeding into a superheated steam oven, or the aluminum base material is fed in a pre-wetted state into a superheated steam oven. A process is hence needed to dry the aluminum base material, because the film that contains aluminum hydroxide is promptly formed at a timing when the water on the surface of the aluminum base material vaporizes.

In the second production method in this embodiment, a pre-treatment step may be included before the above-described surface treatment step. The pre-treatment step is performed as a step that removes the native oxide film existing on the surface of the aluminum base material. Specifically, as the pre-treatment step, immersion treatment or cathodic electrolytic treatment can be performed using an alkali solution. Here, as specific examples of immersion treatment conditions, it is possible to set the alkali solution to pH 8 to 13, the solution temperature to 20°C to 90°C, and the immersion time to 0.1 to 10 seconds. As specific examples of cathodic electrolytic treatment conditions, it is possible to set the alkali solution to pH 8 to 13, the solution temperature to 20°C to 90°C, the cathodic electrolysis time to 0.1 to 10 seconds, and the current density to 1 to 10 A/dm². By the above-described pre-treatment step, the native oxide film existing on the surface of the aluminum base material is removed, and at the same time, localized dissolution of the aluminum base material is suppressed, so that a more homogeneous surface treatment layer 21 can be formed with aluminum hydroxide contained therein. Especially from the viewpoint of homogenization of the surface treatment layer 21, cathodic electrolytic treatment is preferred than immersion treatment because the native oxide layer can be more evenly removed.

### <Production Methods of Resin-coated Surface-treated Aluminum Sheets>

Next, a description will hereinafter be made of a production method of the resin-coated surface-treated aluminum sheet in each embodiment. It is to be noted that the production method presented here in this embodiment is merely an illustrative one, and the production method should not be limited to this method.

The production method of the resin-coated surface-treated aluminum sheet in each embodiment can be a method that forms a resin layer on a surface-treated aluminum sheet obtained as described above, or the like. The formation of the resin layer can be performed by a desired method. In the case of thermoplastic resin, examples include a method that laminates the resin which is in a molten state, directly on the surface-treated aluminum sheet, a method that applies the resin which has been processed into the form of a film on a different production line, to the surface-treated aluminum sheet which has been heated on a lamination line, by thermocompression bonding, and the like. As a method that further enhances the resin adhesin, it is also possible to use a thermoplastic resin film on an adhesive surface on which an adhesive layer of a thermosetting resin has been laminated. In the case of thermosetting resin, there are a method that applies the resin by a roll coater and then dries it in an oven, a method that applies the resin by spraying and then dries it in an oven, and the like.

### <Molded Body (Container, Container Lid, or the Like) and its Production Method>

Next, a description will hereinafter be made of a molded body and its production method in this embodiment.

The molded body in this embodiment is a molded body which has been molded by forming the above-mentioned surface-treated aluminum sheet or resin-coated surface-treated aluminum sheet. Specifically, containers, lids, structural members, and the like are included.

Containers include beverage cans, food cans, rectangular cans, drum cans, spray cans, electronic circuit protection cases, battery cases, and the like. As production methods of these containers, known molding methods can be applied using the above-mentioned surface-treated aluminum sheet or resin-coated surface-treated aluminum sheet. One example will hereinafter be described. The surface-treated aluminum sheet or resin-coated surface-treated aluminum sheet is punched into predetermined shapes with predetermined dimensions, and then molded into various containers in press molds. As molding methods, conventionally known forming techniques such as drawing, drawing-redrawing, drawing and ironing, and the like can be applied. Advance formation of a thermoplastic resin layer or a thermosetting resin layer on the surface of the surface-treated aluminum sheet enables the friction coefficient of the surface to a forming tool to be lowered, so that thinning of a side wall portion of the container can be performed, and a weight reduction of the container can be realized. In addition, it is possible to realize the production of containers with a low environmental load, such as a reduction in the usage of rinse water in the container production step and omission of coating and baking steps which would otherwise be performed after the molding of containers.

Lids include stay-on tab (SOT) type easy-open lids, full-open type easy-open lids (EOE), easy-peel lids using aluminum foil, bottom lids for 3-piece cans such as welded cans, crown-type lids, screw caps, cover lids, and so on. As an example of a molding method of SOT or EOE, the surface-treated aluminum sheet or the resin-coated surface-treated aluminum sheet is first punched into a predetermined shape with predetermined dimensions, and is then or concurrently molded into a can lid in a press mold. Next, an opening end edge portion is curled for double seaming, a sealing compound is applied to the side of an inner surface of the curl and is dried, partial-opening or full-opening scoring and riveting are applied to the side of an outer surface of the can lid, and the attachment of an openable tab is performed to make the can lid. Meanwhile, bottom lids for three-piece cans such as welded cans may be made by a method that does not include the scoring and pressing for EOE conversions among the above-described steps.

Structural members include automobile structural members, watercraft structural members, aircraft structural members, structural members for electric home appliances, construction structural members such as doors, shutters, ducts, and aluminum sashes, and so on. These structural members can each be produced by a known method such as pressing using the above-mentioned surface-treated aluminum sheet or resin-coated surface-treated aluminum sheet.

### <Examples>

The present invention will hereinafter be described more specifically with Examples. A description will first be made of measurement methods in the Examples.

### [Measurement of Oxygen Element to Aluminum Element(O/Al) Ratio]

After an amorphous layer or an amorphous layer and crystalline layer, all containing aluminum hydroxide, were formed on an aluminum base material, a specimen was cut by a microsampling method, and fixed on a stage made of Cu. Subsequently, a cross-sectional TEM specimen of approximately 100 nm was prepared by FIB (focused ion beam) processing, TEM observation and EDS analysis were performed, and the oxygen element to aluminum element (O/Al) ratio was calculated.

It is to be noted that, in that analysis, the FIB processing to the TEM analysis were performed under a cooled environment (cryogenic processing and observation) to obtain precise information.

### <TEM (transmission electron microscope)>

Analytical instrument: "H-9500" manufactured by Hitachi High-Tech Corporation
Observation conditions
   Accelerating voltage: 200 kV
   Magnification accuracy: ± 10%
<EDS (energy dispersion X-ray spectroscopy)>
Analytical instrument: "HD-2700" (transmission electron microscope) manufactured by Hitachi High-Tech Corporation
   Accelerating voltage: 200 kV
   Beam diameter: Approximately 0.2 nm diameter
   Elemental analyzer: "Ultim Max TLE" manufactured by Oxford Instruments
   X-ray detector: Si drift detector
   Energy resolution: Approximately 130 eV
   X-ray extraction angle: 24.8°
   Solid angle: Approx. 1.1 sr
   Acquisition time: 10 seconds

### [180° Peel Test and Evaluation]

The adhesion between a resin layer and a surface treatment layer after canmaking was evaluated as follows.

First, resin layers were formed on a surface-treated aluminum sheet to prepare a resin-laminated sheet. Specifically, on each side of the surface-treated aluminum sheet heated at 280°C for 10 seconds, a non-stretched two-layer PET film (thickness 20 um) was laminated, followed by immersion in water for quenching to obtain the resin-laminated sheet. It is to be noted that, as the two-layer PET film, a film with two layers of PET resin in which isophthalic acid (IA) had been copolymerized at 2 mol%, as a front layer, and PET resin in which isophthalic acid (IA) had been copolymerized at 15 mol%, as a lower layer, laminated at a layer ratio of 4/1 was used.

Using the resin-laminated sheet so obtained, beverage cans were made next. Specifically, 50 mg/m² of paraffin wax was applied to both sides of the resin-laminated sheet, followed by punching with a blank diameter of 142 mm to make cup preforms. Using a known canmaking machine (Body Maker), the cup preforms were then worked into 350 mL cans with a reduction rate of 65%. At that time, the side of an outer side of each can was chosen as a side for evaluation.

After a side wall portion of the formed can was cut in a T-shape at the position and with the dimensions indicated in FIG. 5(a), the 180° peel strength of a 15 mm wide film was measured in the 180° peel test depicted in FIG. 5(b). A tension tester was used for the measurement, and the measurement was performed at room temperature and at a tensile rate of 20 mm/min. The resin adhesion after the canmaking was evaluated as follows.
Passed: Maximum tensile strength by tension tester ≥ 0.8 N/15 mm
Failed: Maximum tensile strength by tension tester < 0.8 N/15 mm

### [Retort Adhesion Test and Evaluation]

With respect to the resin adhesion under a wet environment, test and evaluation were performed by the following method using the above-described beverage can. First, a cut was formed by a utility knife in the outer surface of the formed 350 mL can at a height position of 90 mm from a can bottom. In a state immersed in tap water, the can was placed in a retort chamber, and was subjected to retort treatment at 125°C for 45 min. The maximum film peel length on a lower side of a portion of the unloaded can where the cut had been formed by the utility knife was measured, and was evaluated as follows.

Here, this retort adhesion test at the worked portion after the canmaking is known to exhibit correlations with the corrosion resistance, and both the corrosion resistance and the resin adhesion of the worked portion can be evaluated by this test.
Passed: Film peel length ≤ 30 mm
Failed: Film peel length > 30 mm

### (Example 1)

An aluminum base material - A3104 alloy type, H19 temper, 0.27 mm sheet thickness - was provided. After rolling oil for the aluminum base material was degreased by a known method, cathodic electrolytic treatment of 1 second was performed in a 1% aqueous sodium carbonate solution (treatment solution A-1) of 60°C. Immediately after that, the aluminum base material was rinsed for 0.5 seconds with deionized water (treatment solution B) of 20°C, and water was removed by a roller, followed by drying in a dryer to obtain a surface-treated aluminum sheet with a film containing aluminum hydroxide formed on each side thereof.

According to a TEM cross-sectional image of the thus-obtained surface-treated aluminum sheet, an amorphous layer of 2.5nm average thickness was identified on the aluminum base material. It is to be noted that, as the average thickness of the film, measurement was made in the TEM cross-sectional image at desired 10 points where rugged portions were equally included, and the average of measurement values was used. The determination of amorphousness or crystallinity was made depending on whether or not a lattice fringe existed in the cross-sectional image. Specifically, observation was performed at a high magnification of 2 million times, and the existence or non-existence of the lattice fringe was determined by observing desired different cross-sectional images of two to three areas.

As a result of determination, by an EDS analysis of the cross-section of the film, of the oxygen element to aluminum element (O/Al) ratio of the amorphous layer, it was 3.0. It is to be noted that five central portions of the layer as the object layer were chosen as desired in the TEM cross-sectional image, the (O/Al) ratios at the respective portions were calculated from the results of an EDS analysis of the five areas, and the average of the five ratios was used as the above-described (O/Al) ratio.

Next, a resin layer was thermocompression-bonded on the amorphous layer of the above-obtained surface-treated aluminum sheet to prepare a resin-laminated sheet. Specifically, on each side of the surface-treated aluminum sheet heated at 280°C, a non-stretched two-layer PET film (20 um thickness) was laminated, followed by immersion in water for quenching to obtain the resin-laminated sheet. It is to be noted that, as the two-layer PET film, a film with two layers of PET resin in which isophthalic acid (IA) had been copolymerized at 2 mol%, as a front layer, and PET resin in which isophthalic acid (IA) had been copolymerized at 15 mol%, as a lower layer, laminated at a layer ratio of 4/1 was used. 50 mg/m² of paraffin wax was applied to both sides of the resin-laminated sheet, followed by punching with a blank diameter of 142 mm to make cup preforms. Using the known canmaking machine (Body Maker), the cup preforms were then worked into 350 mL cans with a reduction rate of 65%. Film peel strength of an outer side, a can wall portion, of the above-made beverage can was evaluated by a 180° peel test. The evaluation result is as presented in Table 3.

Using another beverage can made in the same manner, a retort adhesion test of an outer side, a can wall portion, of the beverage can was performed. The evaluation result of the retort adhesion test is as presented in Table 3.

### (Example 2)

Example 1 was repeated except that the temperature of the treatment solution and the treatment time were changed as in Table 1. The results are presented in Tables 2 and 3.

### (Example 3)

Example 1 was repeated except that the temperature of the treatment solution, the treatment conditions, and the treatment time were changed as in Table 1. The results are presented in Tables 2 and 3.

### (Example 4)

Example 1 was repeated except that the treatment conditions were changed to anodic electrolytic treatment, and the treatment time was changed as in Table 1. The results are presented in Tables 2 and 3.

### (Example 5)

Example 4 was repeated except that the treatment time was changed as in Table 1. The results are presented in Tables 2 and 3.

### (Example 6)

An aluminum base material - A5021 alloy type, H18 temper, 0.25 mm sheet thickness - was provided. After rolling oil for the aluminum base material was degreased by the known method, the aluminum base material was immersed for 15 seconds in a 0.004% aqueous sodium carbonate solution (treatment solution A-2) of 98°C. Without water rinsing being performed, the aluminum base material was then squeezed by rollers as it is, followed by drying in a dryer to obtain a surface-treated aluminum sheet with a film containing aluminum hydroxide formed on each side thereof. Similar evaluations as in Example 1 were performed on the surface-treated aluminum sheet so obtained. The results are presented in Tables 2 and 3.

### (Example 7)

Example 6 was repeated except that the treatment solution was changed to a 0.001% aqueous sodium carbonate solution (treatment solution A-3), and the treatment time was changed as in Table 1. The results are presented in Tables 2 and 3.

### (Example 8)

Example 3 was repeated except that the treatment solution was changed to a 0.1% aqueous sodium aluminate solution (treatment solution C-1) and the temperature of the treatment solution and the treatment time were changed as in Table 1. The results are presented in Tables 2 and 3.

### (Example 9)

An aluminum base material - A3104 alloy type, H19 temper, 0.27 mm sheet thickness - was provided. After rolling oil for the aluminum base material was degreased by the known method, cathodic electrolytic treatment was performed for 5 seconds in a 1% aqueous sodium carbonate solution (treatment solution A-1) of 60°C. Immediately after that, the aluminum base material was rinsed for 2 seconds with deionized water (treatment solution B) of 98°C, and water was removed by a roller, followed by drying in a dryer to obtain a surface-treated aluminum sheet with a film containing aluminum hydroxide formed on each side thereof. Evaluations similar to those in Example 1 were performed on the surface-treated aluminum sheet so obtained. The results are presented in Tables 2 and 3.

### (Example 10)

Example 9 was repeated except that the rinse time after the treatment was changed as in Table 1. The results are presented in Tables 2 to 3.

### (Example 11)

Example 8 was repeated except that the treatment solution was changed to a 0.5% aqueous sodium aluminate solution (treatment solution C-2). The results are presented in Tables 2 to 3.

The pH of the treatment solution C-2 was 12.3. If the pH exceeds 12, aluminum hydroxide is formed during immersion treatment, and at the same time, the aluminum metal surface is excessively etched, so that an acicular texture rapidly grown in the form of rough skin is formed. In this case, the thickness of the crystalline layer exceeds 20 times that of the amorphous layer, and film separation is caused by a difference in level between a lump of acicular texture, which has occurred upon forming, and the amorphous layer. Hence, the evaluation results of the above-described 180° peel test and retort adhesion test were "passed," but compared with the other Examples, the resin adhesion of the worked portion was lowered.

### (Comparative Example 1)

An aluminum base material - A3104 alloy type, H19 temper, 0.27 mm sheet thickness - was provided. After rolling oil for the aluminum base material was degreased by the known method, evaluations similar to those in Example 1 were performed directly without performing surface treatment. The results are presented in Tables 2 and 3.

The film naturally formed after the degreasing was a film primarily including aluminum oxide, and the oxygen element to aluminum element (O/Al) ratio was 1.6. In this case, the film on the front layer of the aluminum sheet was dissolved in water during retort processing, and it was impossible to obtain sufficient resin adhesion.

### (Comparative Example 2)

An aluminum base material - A3104 alloy type, H19 temper, 0.27 mm sheet thickness - was provided. After rolling oil for the aluminum base material was degreased by the known method, the aluminum base material was immersed for 2 seconds in a 0.5% aqueous sulfuric acid solution (treatment solution D) of 60°C. Immediately after that, the aluminum base material was rinsed for 0.5 seconds with deionized water (treatment solution B) of 20°C and squeezed by rollers, followed by drying in a dryer to obtain a surface-treated aluminum sheet. Evaluations similar to those in Example 1 were performed on the surface-treated aluminum sheet so obtained. The results are presented in Tables 2 and 3.

Pickling treatment is typically applied as a pre-step of chromate phosphate treatment or the like, but with a method of immersion in an acidic solution, a film that contains aluminum hydroxide is less likely to be formed, and what is formed is a film primarily including aluminum oxide. Accordingly, the oxygen element to aluminum element (O/Al) ratio of the film after the surface treatment was 1.6, the film on the surface of the aluminum sheet was dissolved in water during retort processing, and it was impossible to obtain sufficient resin adhesion.

**[Table 1]**

| | Treatment step | | | | | Rinsing step | | | | |
|---|---|---|---|---|---|---|---|---|---|---|
| | Treatmen t solution | pH | Temperature (°C) | Treatment conditions | Treatment time (sec.) | Treatment solution | pH | Temperature (°C) | Treatment conditions | Treatment time (sec.) |
| Example 1 | A-1 | 11.3 | 60 | Cathodic electrolysis 5A/dm² | 1 | B | 7 | 20 | Immersion | 0.5 |
| Example 2 | A-1 | 11.3 | 40 | Cathodic electrolysis 5A/dm² | 5 | B | 7 | 20 | Immersion | 0.5 |
| Example 3 | A-1 | 11.3 | 80 | Immersion | 2 | B | 7 | 20 | Immersion | 0.5 |
| Example 4 | A-1 | 11.3 | 60 | Anodic electrolysis 5A/dm² | 2 | B | 7 | 20 | Immersion | 0.5 |
| Example 5 | A-1 | 11.3 | 60 | Anodic electrolysis 5A/dm² | 8 | B | 7 | 20 | Immersion | 0.5 |
| Example 6 | A-2 | 10.2 | 98 | Immersion | 15 | - | - | - | - | - |
| Example 7 | A-3 | 9.8 | 98 | Immersion | 8 | - | - | - | - | - |
| Example 8 | C-1 | 11.3 | 98 | Immersion | 8 | B | 7 | 20 | Immersion | 0.5 |
| Example 9 | A-1 | 11.3 | 60 | Cathodic electrolysis 5A/dm² | 2 | B | 7 | 98 | Immersion | 2 |
| Example 10 | A-1 | 11.3 | 60 | Cathodic electrolysis 5A/dm² | 2 | B | 7 | 98 | Immersion | 8 |
| Example 11 | C-2 | 12.3 | 98 | Immersion | 8 | B | 7 | 20 | Immersion | 0.5 |
| Comparativ e example 1 | - | - | - | - | - | - | - | - | - | - |
| Comparativ e example 2 | D | 1.6 | 60 | Immersion | 2 | B | 7 | 20 | Immersion | 0.5 |

| | | | | | | | | | | |
|---|---|---|---|---|---|---|---|---|---|---|
| A-1 : 1% aqueous sodium carbonate solution A-2 : 0.004% aqueous sodium carbonate solution A-3 : 0.001% aqueous sodium carbonate solution B : deionized water C-1 : 0.1% aqueous sodium aluminate solution C-2 : 0.5% aqueous sodium aluminate solution D : 0.5% aqueous sulfric acid solution | | | | | | | | | | |

**[Table 2]**

| | Upper layer (front layer side) | | | Lower layer (base material side) | | | Upper layer thickness/ Lower layer thickness |
|---|---|---|---|---|---|---|---|
| | Average thickness (nm) | Amorphousness or crystallinity | O/Al ratio | Average thickness (nm) | Amorphousness or crystallinity | O/Al ratio | |
| Example 1 | 0.0 | - | - | 2.5 | Amorphous | 3.0 | - |
| Example 2 | 7.0 | Crystalline | 3.0 | 3.0 | Amorphous | 2.8 | 2.3 |
| Example 3 | 12.7 | Crystalline | 2.9 | 2.3 | Amorphous | 2.7 | 5.5 |
| Example 4 | 0.0 | - | - | 53.7 | Amorphous | 1.9 | - |
| Example 5 | 0.0 | - | - | 88.4 | Amorphous | 1.8 | - |
| Example 6 | 75.0 | Crystalline | 2.0 | 6.0 | Amorphous | 2.0 | 12.5 |
| Example 7 | 34.7 | Crystalline | 2.1 | 5.3 | Amorphous | 2.0 | 6.5 |
| Example 8 | 15.0 | Crystalline | 2.9 | 2.6 | Amorphous | 2.3 | 5.8 |
| Example 9 | 5.2 | Crystalline | 2.4 | 2.8 | Amorphous | 2.1 | 1.9 |
| Example 10 | 52.0 | Crystalline | 2.0 | 5.0 | Amorphous | 2.1 | 10.4 |
| Example 11 | 45.0 | Crystalline | 3.0 | 2.0 | Amorphous | 2.5 | 22.5 |
| Comparative Example 1 | 0.0 | - | - | 6.7 | Amorphous | 1.6 | - |
| Comparative Example2 | 0.0 | - | - | 2.8 | Amorphous | 1.6 | - |

**[Table 3]**

| | 180° peel test | | Retort adhesion test | |
|---|---|---|---|---|
| | Value (N/15mm) | Determination | Value (mm) | Determination |
| Example 1 | 1.8 | Passed | 28 | Passed |
| Example 2 | 2.2 | Passed | 24 | Passed |
| Example 3 | 2.0 | Passed | 25 | Passed |
| Example 4 | 1.4 | Passed | 27 | Passed |
| Example 5 | 1.2 | Passed | 24 | Passed |
| Example 6 | 2.6 | Passed | 2 | Passed |
| Example 7 | 2.5 | Passed | 1 | Passed |
| Example 8 | 1.0 | Passed | 23 | Passed |
| Example 9 | 2.4 | Passed | 18 | Passed |
| Example 10 | 2.6 | Passed | 3 | Passed |
| Example 11 | 0.9 | Passed | 9 | Passed |
| Comparative example 1 | 1.9 | Passed | 38 | Failed |
| Comparative example 2 | 2.3 | Passed | 40 | Failed |

According to Examples 1 to 11 and Comparative Examples 1 and 2 described above, the surface-treated aluminum sheets produced by these Examples have been found to have all of corrosion resistance, formability, and resin adhesion. In addition, the surface-treated aluminum sheets produced by these Examples have been found to achieve the above-described advantageous effects despite the short period of treatment time. In contrast, the untreated aluminum sheet and surface-treated aluminum sheet of the Comparative Examples have been found to be unable to satisfy one or more of corrosion resistance, formability, and resin adhesion as required.

### [Calculation of Absorbance Peak Ratio (Pa/Pb)]

Under the below-described conditions, absorbance in an infrared absorption spectrum of each surface treatment layer was calculated by the reflection absorption spectroscopy (RAS) method with use of a known Fourier transformation infrared spectrometer (FT-IR). A deposited gold mirror was used as a background.

Instrument: "FTIR-6600FV" manufactured by JASCO Corporation
Measurement conditions
   Measurement method: RAS method
   Detector: TGS
   Wavenumber resolution: 4 cm⁻¹
   Cumulative number: 100
   Measurement temperature: room temperature
   Measurement atmosphere: Air
   Measurement area: 2 cm × 1 cm

As the measurement method of the absorbance peaks, the absorbance at the wavenumber of 1200 cm⁻¹ and the absorbance at the wavenumber of 850 cm⁻¹ in the infrared absorption spectrum were first connected with the straight line as presented in FIG. 8, and the straight line was used as a baseline. As the peak originated from Al-O stretching vibrations of amorphous alumina, the highest point from the baseline in the wavenumber range of 850 to 1000 cm⁻¹ was then designated as the absorbance peak height Pa. Meanwhile, as the peak originated from Al-OH bending vibrations of aluminum hydroxide, the highest point from the baseline in the wavenumber range of 1000 to 1200 cm⁻¹ was designated as the absorbance peak height Pb. The absorbance peak ratio (Pa/Pb) was calculated from the measured Pa and Pb.

The absorbance peak height Pa and the absorbance peak height Pb are presented along with the calculated absorbance peak ratio (Pa/Pb) in Table 5.

### [180° Peel Test and Evaluation]

The adhesion between a resin layer and a surface treatment layer after canmaking was evaluated as follows. First, the resin layer was formed on a surface-treated aluminum sheet to prepare a resin-laminated sheet. Specifically, on each side of the surface-treated aluminum sheet heated at 280°C for 10 seconds, a non-stretched two-layer PET film (thickness 20 um) was laminated, followed by immersion in water for quenching to obtain the resin-laminated sheet. It is to be noted that, as the two-layer PET film, a film with two layers of PET resin in which isophthalic acid (IA) had been copolymerized at 2 mol%, as a front layer, and PET resin in which isophthalic acid (IA) had been copolymerized at 15 mol%, as a lower layer, laminated at a layer ratio of 4/1 was used.

Using the resin-laminated sheet so obtained, drawn and ironed cans were made next. Specifically, 50 mg/m² of paraffin wax was applied to both sides of the resin-laminated sheet, followed by punching with a blank diameter of 142 mm to make cup preforms. Using the known canmaking machine (Body Maker), the cup preforms were then worked into 350 mL drawn and ironed cans with a reduction rate of 65%. At that time, the side of an outer surface of each can was chosen as a surface for evaluation.

After a side wall portion of the formed can was cut in a T-shape at the position and with the dimensions indicated in FIG. 9(a), the 180° peel strength of a 15 mm wide film was measured by the 180° peel test depicted in FIG. 9(b). A tension tester was used for the measurement, and the measurement was performed at room temperature and at a tensile rate of 20 mm/min. The resin adhesion after the canmaking was evaluated as follows.
Passed: Maximum tensile strength by tension tester ≥ 0.8 N/15 mm
Failed: Maximum tensile strength by tension tester < 0.8 N/15 mm

### [Retort Adhesion Test and Evaluation]

With regard to the resin adhesion under a wet environment, test and evaluation were performed by the following method using the above-described drawn and ironed can. First, a cut was formed by a utility knife in the outer surface of the 350 mL drawn and ironed can at a height position of 90 mm from a can bottom. In a state immersed in tap water, the can was placed in a retort chamber, and was subjected to retort treatment at 125°C for 45 minutes. The maximum film peel length on a lower side of a portion of the unloaded can where the cut had been formed by the utility knife was measured, and was evaluated as follows.

Here, this retort adhesion test at the worked portion after the canmaking is known to exhibit correlations with the corrosion resistance, and both the corrosion resistance and the resin adhesion of the worked portion can be evaluated by this test.
Passed: Film peel length ≤ 30 mm
Failed: Film peel length > 30 mm

### [Measurement of Average Thickness of Surface Treatment Layer]

The average thickness of each surface treatment layer was measured from a cross-sectional observation of the film by TEM (transmission electron microscope). Specimens were cut by the microsampling method from the various surface-treated aluminum sheets, and each specimen was fixed on a stage made of Cu. Subsequently, a cross-sectional TEM specimen of approximately 100 nm thickness was prepared by FIB (focused ion beam) processing, and its TEM observation was performed. As the average thickness of the surface treatment layer, measurement was made in the TEM cross-sectional image at desired 10 points where rugged portions were equally included, and the average of the measurement values was used.

### (Example 12)

An aluminum base material - A3104 alloy type, H19 temper, 0.27 mm sheet thickness - was provided. After rolling oil for the aluminum base material was degreased by the known method, the aluminum base material was immersed for 8 seconds in a treatment solution (deionized water of 98°C) (surface treatment step) as presented in Table 4. Water was removed by a roller, followed by drying in a dryer to obtain a surface-treated aluminum sheet with a surface treatment layer containing aluminum hydroxide formed on each side thereof.

The height (Pa) of an absorbance peak at the wavenumbers of 850 to 1000 cm⁻¹ originated primarily from Al-O stretching vibrations of amorphous alumina and the height (Pb) of an absorbance peak at the wavenumbers of 1000 to 1200 cm⁻¹ originated primarily from Al-OH bending vibrations of aluminum hydroxide in the above-obtained surface treatment layer were measured, and were as presented in Table 5. Further, the absorbance peak ratio (Pa/Pb) was also calculated from the thus-obtained values, and was as presented in Table 5. An infrared absorption spectrum in Example 12 is presented in FIG. 10.

Next, a resin layer was thermocompression-bonded on the surface treatment layer of the above-obtained surface-treated aluminum sheet to prepare a resin-laminated sheet. Specifically, on each side of the surface-treated aluminum sheet heated at 280°C, a non-stretched two-layer PET film (thickness 20 um) was laminated, followed by immersion in water for quenching to obtain the resin-laminated sheet. It is to be noted that, as the two-layer PET film, a film with two layers of PET resin in which isophthalic acid (IA) had been copolymerized at 2 mol%, as a front layer, and PET resin in which isophthalic acid (IA) had been copolymerized at 15 mol%, as a lower layer, laminated at a layer ratio of 4/1 was used. 50 mg/m² of paraffin wax was applied to both sides of the resin-laminated sheet, followed by punching with a blank diameter of 142 mm to make cup preforms. Using the known canmaking machine (Body Maker), the cup preforms were then worked into 350 mL cans with a reduction rate of 65%. The film peel strength of an outer side, a can wall portion, of the above-made drawn and ironed can was evaluated by a 180° peel test. The evaluation result was as presented in Table 5.

Using a drawn and ironed can made in the same manner, a retort adhesion test of an outer side, a can wall portion, of the drawn and ironed can was performed. The evaluation results of the retort adhesion test were as presented in Table 5.

### (Example 13)

Rolling oil for the aluminum base material was degreased by the known method, and as a surface treatment step, the aluminum base material was then held for 30 seconds under a steam environment of 125°C in a retort chamber as presented in Table 4. Except for these, Example 12 was repeated. The results are presented in Table 5. Further, an infrared absorption spectrum in Example 13 is presented in FIG. 11.

### (Example 14)

After rolling oil for the aluminum base material was degreased by the known method, cathodic electrolytic treatment of 2 seconds was performed in a 1% aqueous sodium carbonate solution of 60°C (pre-treatment step). Immediately after that, the aluminum base material was immersed for 1 second in a surface treatment solution (tap water of 25°C) (surface treatment step). Water was removed by a roller, followed by drying in a dryer to obtain a surface-treated aluminum sheet with a surface treatment layer containing aluminum hydroxide formed on each side thereof. The results are presented in Table 5.

### (Example 15)

After rolling oil for the aluminum base material was degreased by the known method, a pre-treatment step was performed in a manner similar to that in Example 14. Immediately after that, the aluminum base material was immersed for 2 seconds in a treatment solution (deionized water of 98°C) (surface treatment step). Water was removed by a roller, followed by drying in a dryer to obtain a surface-treated aluminum sheet with a surface treatment layer containing aluminum hydroxide formed on each side thereof. The results are presented in Table 5.

### (Example 16)

After rolling oil for the aluminum base material was degreased by the known method, a pre-treatment step was performed in a manner similar to that in Example 14. Immediately after that, a surface treatment step was performed in a manner similar to that in Example 12, and water was then removed by a roller, followed by drying in a dryer to obtain a surface-treated aluminum sheet with a surface treatment layer containing aluminum hydroxide formed on each side thereof. The results are presented in Table 5.

### (Example 17)

After rolling oil for the aluminum base material was degreased by the known method, a pre-treatment step was performed in a manner similar to that in Example 14. Immediately after that, the aluminum base material was immersed for 5 seconds in a treatment solution (0.5% aqueous sodium aluminate solution of 80°C) (surface treatment step). Water was removed by a roller, followed by drying in a dryer to obtain a surface-treated aluminum sheet with a surface treatment layer containing aluminum hydroxide formed on each side thereof. The results are presented in Table 5.

### (Example 18)

After rolling oil for the aluminum base material was degreased by the known method, a pre-treatment step was performed in a manner similar to that in Example 14. Immediately after that, the aluminum base material was immersed for 3 days in a treatment solution (deionized water of 25°C) (surface treatment step). Water was removed by a roller, followed by drying in a dryer to obtain a surface-treated aluminum sheet with a surface treatment layer containing aluminum hydroxide formed on each side thereof. The film so formed was a film primarily including aluminum hydroxide, and its absorbance peak ratio (Pa/Pb) was 0.712. Meanwhile, the thickness of the surface treatment layer was as thick as 2,746 nm. Hence, the layer underwent a cohesive failure when forming, and the surface-treated aluminum sheet failed the 180° peel test of the can wall. The results are presented in Table 5.

### (Example 19)

As a surface treatment step for the aluminum base material, the aluminum base material was immersed for 3 days in a treatment solution (deionized water of 25°C) as presented in Table 4. Except for these, Example 12 was repeated. The film so formed was a film primarily including aluminum hydroxide, and its absorbance peak ratio (Pa/Pb) was 0.834. Meanwhile, the thickness of the surface treatment layer was as thick as 3,200 nm. Hence, the film underwent a cohesive failure by forming, and the resultant surface-treated aluminum sheet failed the 180° peel test of the can wall. The results are presented in Table 5.

### (Example 20)

After rolling oil for the aluminum base material was degreased by the known method, immersion treatment of 4 seconds was performed in a 1% aqueous sodium carbonate solution of 80°C (pre-treatment step). Immediately after that, ejection of steam was performed as a surface treatment step (treatment temperature: 125°C, treatment time: 60 seconds). Water was removed by a roller, followed by drying in a dryer to obtain a surface-treated aluminum sheet with a surface treatment layer containing aluminum hydroxide formed on each side thereof. The results are presented in Table 5.

### (Comparative Example 3)

An aluminum base material - A3104 alloy type, H19 temper, 0.27 mm sheet thickness - was provided. After rolling oil for the aluminum base material was degreased by the known method, evaluations similar to those in Example 12 were performed directly without performing surface treatment. The results are presented in Table 5. Films which were naturally formed after the degreasing were films primarily including aluminum oxide, and their absorbance peak ratio (Pa/Pb) was 93. In this case, the native oxide film existing on the front layer of the aluminum sheet is dissolved in water during retort processing. The retort adhesion test resulted in failing to obtain sufficient resin adhesion. The results are presented in Table 5.

### (Comparative Example 4)

An aluminum base material - A3104 alloy type, H19 temper, 0.27 mm sheet thickness - was provided. After rolling oil for the aluminum base material was degreased by the known method, the aluminum base material was immersed for 2 seconds in a 0.5% aqueous sulfuric acid solution of 60°C. Water was removed by a roller, followed by drying in a dryer to obtain a surface-treated aluminum sheet. Evaluations similar to those in Example 12 were performed on the surface-treated aluminum sheet so obtained. The results are presented in Table 5. Pickling treatment is typically applied as a pre-step for chromate phosphate treatment or the like, but with a method of immersion in an acidic solution, films that contain aluminum hydroxide are less likely to be formed, and what are formed are films primarily including amorphous alumina. Accordingly, the absorbance peak ratio (Pa/Pb) of films after the surface treatment was 9.895. As the film on the front layer of the aluminum sheet was dissolved in water during retort processing, the retort adhesion test resulted in failing to obtain sufficient resin adhesion. The results are presented in Table 5. Further, an infrared absorption spectrum in Comparative Example 4 is presented in FIG. 12

### (Comparative Example 5)

After rolling oil for the aluminum base material was degreased by the known method, a pre-treatment step was performed in a manner similar to that in Example 14. Immediately after that, the aluminum base material was immersed for 15 seconds in a treatment solution (tap water of 98°C) (surface treatment step). Water was removed by a roller, followed by drying in a dryer to obtain a surface-treated aluminum sheet with a surface treatment layer containing aluminum hydroxide formed on each side thereof. If treated with tap water of 70°C or higher, the formation of aluminum hydroxide is inhibited by effects of calcium, silicon, magnesium, iron, and the like in the tap water, so that what are formed are films primarily including amorphous alumina. The absorbance peak ratio (Pa/Pb) of each film was 7.750. As the film on the front layer of the aluminum sheet was dissolved in water during retort processing, the retort adhesion test resulted in failing to obtain sufficient resin adhesion. The results are presented in Table 5.

### (Comparative Example 6)

After rolling oil for the aluminum base material was degreased by the known method, anodic electrolytic treatment of 15 seconds was performed in a 1% aqueous sodium carbonate solution of 65°C (pre-treatment step). Immediately after that, the aluminum base material was immersed for 1 second in a treatment solution (tap water of 25°C) (surface treatment step). Water was removed by a roller, followed by drying in a dryer to obtain a surface-treated aluminum sheet with a surface treatment layer containing aluminum hydroxide formed on each side thereof. A film that is formed by anodic electrolytic treatment is a film primarily including amorphous alumina. Accordingly, the absorbance peak ratio (Pa/Pb) of each film was 6.364. As the film on the front layer of the aluminum sheet was dissolved in water during retort processing, the retort adhesion test resulted in failing to obtain sufficient resin adhesion. The results are presented in Table 5.

**[Table 4]**

| | Pre-treatment step | | | | | Surface treatment step | | | | | |
|---|---|---|---|---|---|---|---|---|---|---|---|
| | Treatment solution | pH | Temperature (°C) | Treatment conditions | Treatment time (sec.) | Treatment solution | pH | Electrical conductivity (*µ*S/cm) | Temperature (°C) | Treatment conditions | Treatment time (sec.) |
| Example 12 | - | - | - | - | - | Deionized water | 7 | 1.43 | 98 | Immersion | 8 |
| Example 13 | - | - | - | - | - | Steam | - | - | 125 | Spraying | 30 |
| Example 14 | 1% aqueous sodium carbonate solution | 11.3 | 60 | Cathodic electrolysis 5A/dm2 | 2 | Tap water | 7 | 120 | 25 | Immersion | 1 |
| Example 15 | 1% aqueous sodium carbonate solution | 11.3 | 60 | Cathodic electrolysis 5A/dm2 | 2 | Deionized water | 7 | 1.43 | 98 | Immersion | 2 |
| Example 16 | 1% aqueous sodium carbonate solution | 11.3 | 60 | Cathodic electrolysis 5A/dm2 | 2 | Deionized water | 7 | 1.43 | 98 | Immersion | 8 |
| Example 17 | 1% aqueous sodium carbonate solution | 11.3 | 60 | Cathodic electrolysis 5A/dm2 | 2 | 0.5% aqueous sodium aluminate solution | 12.3 | 7080 | 80 | Immersion | 5 |
| Example 18 | 1% aqueous sodium carbonate solution | 11.3 | 60 | Cathodic electrolysis 5A/dm² | 2 | Deionized water | 7 | 1.43 | 25 | Immersion | 259 × 10³ |
| Example 19 | - | - | - | - | - | Deionized water | 7 | 1.43 | 25 | Immersion | 259 × 10³ |
| Example 20 | 1% aqueous sodium carbonate solution | 11.3 | 80 | Immersion | 4 | Steam | - | - | 125 | Spraying | 60 |
| Comparative example 3 | - | - | - | - | - | - | - | - | - | - | - |
| Comparative example 4 | 0.5% aqueous sulfric acid solution | 1.6 | 60 | Immersion | 2 | - | - | - | - | - | - |
| Comparative example 5 | 1% aqueous sodium carbonate solution | 11.3 | 60 | Cathodic electrolysis 5A/dm2 | 2 | Tap water | 7 | 120 | 98 | Immersion | 15 |
| Comparative example 6 | 1% aqueous sodium carbonate solution | 11.3 | 60 | Anodic electrolysis 5A/dm2 | 15 | Tap water | 7 | 120 | 25 | Immersion | 1 |

**[Table 5]**

| | Surface treatment layer | | | | Retort adhesion test | | 180° peel test | |
|---|---|---|---|---|---|---|---|---|
| | Average thickness (nm) | Absorbance (Abs) peak Pa | Absorbance (Abs) peak Pb | Absorbance peak ratio (Pa/Pb) | Maximum film peel length (mm) | Determination | Maximum tensile strength (N/15mm ) | Determination |
| Example 12 | 40 | 0.0208 | 0.0142 | 1.465 | 8 | Passed | 2.5 | Passed |
| Example 13 | 940 | 0.0073 | 0.3793 | 0.019 | 1 | Passed | 3.0 | Passed |
| Example 14 | 20 | 0.0221 | 0.0056 | 3.946 | 24 | Passed | 2.2 | Passed |
| Example 15 | 30 | 0.0185 | 0.0060 | 3.083 | 12 | Passed | 2.4 | Passed |
| Example 16 | 65 | 0.0233 | 0.0369 | 0.631 | 3 | Passed | 2.6 | Passed |
| Example 17 | 30 | 0.0224 | 0.0051 | 4.392 | 18 | Passed | 0.9 | Passed |
| Example 18 | 2746 | 0.3264 | 0.4583 | 0.712 | 8 | Passed | 0.6 | Failed |
| Example 19 | 3200 | 0.2778 | 0.3333 | 0.834 | 10 | Passed | 0.4 | Failed |
| Example 20 | 1880 | 0.0081 | 0.8420 | 0.010 | 2 | Passed | 1.8 | Passed |
| Comparative example 3 | 5 | 0.0093 | 0.0001 | 93.000 | 45 | Failed | 1.9 | Passed |
| Comparative example 4 | 8 | 0.0188 | 0.0019 | 9.895 | 38 | Failed | 2.3 | Passed |
| Comparative example 5 | 50 | 0.0062 | 0.0008 | 7.750 | 33 | Failed | 1.6 | Passed |
| Comparative example 6 | 100 | 0.0140 | 0.0022 | 6.364 | 31 | Failed | 2.0 | Passed |

When Example 15 and Example 16 are compared, their pre-treatment steps are both the same in details, but in their surface treatment steps, the treatment was performed for a longer immersion time in Example 16 than in Example 15. It is considered that, as a result, the film primarily including aluminum hydroxide grew more and the value of the absorbance peak ratio relatively became smaller in Example 16 than in Example 15.

When Example 12 and Example 16 are compared, their surface treatment steps are both the same in details, but Example 12 is different in undergoing no pre-pretreatment step. It has been confirmed that Example 16 resulted in greater growth of the film primarily including aluminum hydroxide and greater thickness of the surface treatment layer despite the immersion was performed in the same surface treatment solution for the same length of time (8 seconds) in the surface treatment step. One possible reason for these is that the native oxide film on the surface of the aluminum base material had been removed by the pre-treatment step in Example 16. In Example 12 in which no pre-treatment step is performed, in contrast, it is considered that the native oxide film was first removed by the surface treatment step, and the growth of the film primarily including aluminum hydroxide was subsequently initiated. The above-described differences are considered to have arisen as the difference in the absorbance peak ratio.

Example 17 used the alkali solution of high pH as the surface treatment solution in the surface treatment step. As a result, the absorbance peak ratio became the highest among Examples 12 to 20. One possible reason for this is that, by the use of the surface treatment solution of high pH, the dissolution rate of the aluminum base material was higher than the growth rate of the film primarily including aluminum hydroxide. It is also considered that, if an aluminum alloy sheet is immersed in an alkali solution of high pH, the alloying components in the base material are also dissolved along with aluminum, and the growth of a film primarily including aluminum hydroxide is inhibited by the alloying components.

In Example 18 and Example 19, the results of the retort adhesion test were "passed," but the results in the 180° peel test did not meet the standard. One possible reason for this result is that the thickness of the surface treatment layer was greater than 2000 nm in both Example 18 and Example 19, and a cohesive failure hence occurred inside the surface treatment layer during the 180° peel test. These Examples cannot be used in applications where the required formability is high (applications where the reduction rate of each can wall is high), such as drawn and ironed cans, but can be used without problem in applications where the required formability is low, for example, if applied to lids and DR cans (drawn and redrawn cans), structural members subjected to bending forming, and the like.

When Comparative Example 5, Example 16, and Example 14 are compared, their surface pre-treatment steps are all the same, but they are different in that Comparative Example 5 used tap water as the surface treatment solution, but Example 16 used deionized water. As a result, the absorbance peak ratio resulted to be greater than 6 in Comparative Example 5. One possible reason for this result is that the formation of a film primarily including aluminum hydroxide was inhibited by calcium, silicon, magnesium, iron, and the like contained in tap water. Meanwhile, it has also been confirmed that, if at approximately 25°C and for short seconds as in Example 14, the formation of a film primarily including aluminum hydroxide is not inhibited even in tap water.

Through a study on Comparative Example 6, it has been confirmed that the anodic electrolysis in the pre-treatment step in Comparative Example 6 was a method to grow a film primarily including amorphous alumina, and as a result, the value of the resultant absorbance peak ratio exceeded 6, and the standard was not met in the results of the retort adhesion test.

From Examples 12 to 20 and Comparative Examples 3 to 6 described above, it has been demonstrated that a surface-treated aluminum sheet has all of corrosion resistance, formability, and resin adhesion irrespective of its production method insofar as the absorbance peak ratio (Pa/Pb) of its surface treatment layer is 6 or smaller. It has also been demonstrated that the surface-treated aluminum sheets produced by these Examples were able to achieve the above-described advantageous effects despite the short period of treatment time. Meanwhile, it has been demonstrated that, in the untreated or surface-treated aluminum sheet of each Comparative Example, when the absorbance peak ratio (Pa/Pb) of its surface treatment layer exceeded 6, the retort adhesion test was failed, and the corrosion resistance, the formability, and the resin adhesion were not met as required.

To ensure the adhesion between the surface of an aluminum base material and a resin layer, a film (surface treatment layer) formed on the surface of the aluminum base material needs to be insoluble or less soluble. In other words, the adhesion between the base material and the resin film is retained by stable maintenance of an adhesion interface between them without dissolution. This mechanism is not limited to cases where a high temperature and humidity environment is used as in retort treatment. Even in the air of normal temperature, water in the air penetrates from the resin film over long hours, and can reach the adhesion interface. If used under the atmospheric environment of normal temperature, the surface-treated aluminum sheets of this disclosure are also effectively applied, for example, to construction structural members, automobile structural members, and the like.

### [Industrial Applicability]

As has been described above, the surface-treated aluminum sheets of this invention can be applied to a wide field of industry including containers and their lids - such as food cans, beverage cans, electronic circuit protection cases, and battery cases -, structural members for watercrafts, aircrafts, automobiles, and electric home appliances, construction structural members, heat exchanger members, and so on.

### [Reference Signs List]

100: Surface-treated aluminum sheet
10: Aluminum base material
20: Amorphous layer
30: Crystalline layer
200: Surface-treated aluminum sheet
300: Resin-coated surface-treated aluminum sheet
40: Resin layer
400: Surface-treated aluminum sheet
11: Aluminum base material
21: Surface treatment layer
500: Resin-coated surface-treated aluminum sheet
31: Resin layer

## Claims

1. A surface-treated aluminum sheet comprising:
an aluminum base material; and
an amorphous layer formed on at least one side of the aluminum base material,
wherein the aluminum base material is an aluminum sheet or an aluminum alloy sheet, and
the amorphous layer contains aluminum hydroxide, has an oxygen element to aluminum element (O/Al) ratio in a range of 1.7 to 3.0, and has a thickness of 1 nm or greater.

2. The surface-treated aluminum sheet according to claim 1, further comprising:
a crystalline layer formed on the amorphous layer,
wherein the crystalline layer contains aluminum hydroxide, has an oxygen element to aluminum element (O/Al) ratio in a range of 1.7 to 3.0, and has a thickness of 5 nm or greater.

3. The surface-treated aluminum sheet according to claim 2, wherein a thickness of the crystalline layer is 20 times or less a thickness of the amorphous layer.

4. A resin-coated surface-treated aluminum sheet, wherein the resin-coated surface-treated aluminum sheet further has a resin layer on the surface-treated aluminum sheet according to any one of claims 1 to 3, and the resin layer is a thermoplastic resin layer or a thermosetting resin layer.

5. A molded body comprising:
the surface-treated aluminum sheet according to any one of claims 1 to 3, or the resin-coated surface-treated aluminum sheet according to claim 4.

6. The molded body according to claim 5, wherein the molded body is one of a container, a lid, or a structural member.

7. A surface-treated aluminum sheet comprising:
an aluminum base material; and
a surface treatment layer formed on at least one side of the aluminum base material,
wherein the aluminum base material is an aluminum sheet or an aluminum alloy sheet, and
the surface treatment layer contains aluminum hydroxide, and has a Pa/Pb value of 6.0 or smaller when, in an infrared absorption spectrum measured by Fourier transformation infrared spectrometer, a height of an absorbance peak at wavenumbers of 850 to 1000 cm⁻¹ is defined as Pa and a height of an absorbance peak at wavenumbers of 1000 to 1200 cm⁻¹ is defined as Pb.

8. The surface-treated aluminum sheet according to claim 7, wherein the surface treatment layer has a thickness of 1 to 2000 nm.

9. A resin-coated surface-treated aluminum sheet, wherein the resin-coated surface-treated aluminum sheet further has a resin layer on the surface-treated aluminum sheet according to claim 7 or 8, and the resin layer is a thermoplastic resin layer or a thermosetting resin layer.

10. A molded body comprising:
the surface-treated aluminum sheet according to claim 7 or 8, or the resin-coated surface-treated aluminum sheet according to claim 9.

11. The molded body according to claim 10, wherein the molded body is one of a container, a lid, or a structural member.
